(19) **Europäisches Patentamt**
**European Patent Office**
**Office européen des brevets**

(11) **EP 1 496 642 B1**

(12) **EUROPEAN PATENT SPECIFICATION**

(45) Date of publication and mention
of the grant of the patent:
**13.06.2012 Bulletin 2012/24**

(51) Int Cl.:
*G11B 20/00* (2006.01)     *G06F 1/00* (2006.01)
*H04L 9/08* (2006.01)

(21) Application number: **03719095.6**

(22) Date of filing: **10.04.2003**

(86) International application number:
**PCT/JP2003/004545**

(87) International publication number:
**WO 2003/088563 (23.10.2003 Gazette 2003/43)**

(54) **INFORMATION PROCESSING DEVICE AND METHOD, INFORMATION PROVIDING DEVICE AND METHOD, USE RIGHT MANAGEMENT DEVICE AND METHOD, RECORDING MEDIUM, AND PROGRAM**

INFORMATIONSVERARBEITUNGSEINRICHTUNG UND -VERFAHREN,
INFORMATIONSBEREITSTELLUNGSEINRICHTUNG UND -VERFAHREN,
VERWALTUNGSEINRICHTUNG UND -VERFAHREN FÜR BENUTZUNGSRECHTE,
AUFZEICHNUNGSMEDIUM UND PROGRAMM

DISPOSITIF ET PROCEDE DE TRAITEMENT D'INFORMATION, DISPOSITIF ET PROCEDE
GENERANT L'INFORMATION, DISPOSITIF ET PROCEDE DE GESTION DU DROIT D'UTILISATION,
SUPPORT D'ENREGISTREMENT ET PROGRAMME CORRESPONDANTS

(84) Designated Contracting States:
**AT BE BG CH CY CZ DE DK EE ES FI FR GB GR
HU IE IT LI LU MC NL PT RO SE SI SK TR**

(30) Priority: **15.04.2002 JP 2002111554**

(43) Date of publication of application:
**12.01.2005 Bulletin 2005/02**

(73) Proprietor: **Sony Corporation
Tokyo 141-0001 (JP)**

(72) Inventor: **Ishiguro, Ryuji,
c/o Sony Corporation
Shinagawa-ku,
Tokyo 141-0001 (JP)**

(74) Representative: **Horner, David Richard et al
D Young & Co LLP
120 Holborn
London EC1N 2DY (GB)**

(56) References cited:
**EP-A- 1 043 860      EP-A1- 1 187 390
JP-A- 2000 048 076      JP-A- 2000 048 076**

• WALDVOGEL M ET AL: "THE VERSAKEY
FRAMEWORK: VERSATILE GROUP KEY
MANAGEMENT" IEEE JOURNAL ON SELECTED
AREAS IN COMMUNICATIONS, IEEE SERVICE
CENTER, PISCATAWAY, NJ, US, vol. 17, no. 9,
September 1999 (1999-09), pages 1614-1631,
XP002941560 ISSN: 0733-8716

**Description**

Technical Field

The present invention relates to information processing apparatuses and methods, information providing apparatuses and methods, usage right management apparatuses and methods, recording media, and programs. More particularly, the present invention relates to an information processing apparatus and method, an information providing apparatus and method, a usage right management apparatus and method, a recording medium, and a program for reliably preventing unauthorized use of content.

Background Art

Recently various broadband environments have been developed. Services for distributing various types of content, such as music data and moving image data, have started to be offered on a large scale.

For example, a subscription music delivery service, such as "PressPlay" (trademark), has been offered. A user of the music delivery service pays a predetermined monthly fee to use music content within a predetermined scope (for example, up to 1000 songs can be played in the case of streaming playback; up to 100 songs can be stored in the case of downloading audio on a hard disk of a personal computer; and up to 20 songs can be copied in the case of writing (copying) audio to a CD (Compact Disk)-R).

A system for managing right information of a user receiving content provided by such a delivery service is disclosed in, for example, Japanese Unexamined Patent Application Publication No. 2001-352321. In this system, nodes associated with a plurality of services are arranged in a tree structure. On a path from a node associated with a predetermined service to a node (device) associated with each leaf belonging to this service, there are nodes for which key information (DNK (Device Node Key)) has been set. An enabling key block (EKB) including such key information is used.

In the system, an EKB is added to content distributed in a particular service. Devices that can use this service are managed by letting these devices obtain updated key information included in the EKB using DNKs given to the individual devices. In this case, a device that cannot obtain updated information from the EKB using a DNK is not allowed to receive the service provided from this point onward.

Accordingly, the use of content by each device is managed without performing authentication between the device and a server that provides the content to the device every time the content is provided to the device.

In the system using the EKB, if information described in the EKB is read, this read information makes it possible to use all pieces of content distributed in a particular service (all pieces of content having the same EKB).

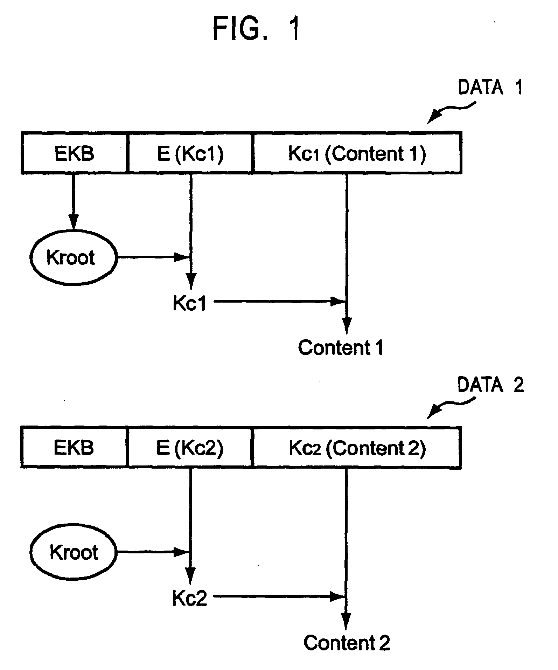

For example, when service A offers data 1 and data 2 formatted as shown in Fig. 1, device A having obtained information described in an EKB of data 1 can use not only content 1 included in data 1, but also content 2 included in data 2 using obtained key information.

Specifically, as shown in Fig. 1, data 1 includes the EKB, content key 1 (Kc1) encrypted by a root key (Kroot) included in the EKB (key associated with a node of a root of the system), and Content 1 encrypted by the content key 1. When device A obtains the root key from the EKB, device A decrypts the content key 1 using the root key and then decrypts the content 1 using the obtained content key 1.

Device A can obtain content key 2 (Kc2) included in data 2 in the format similar to that of data 1 using the root key obtained from the EKB of data 1. Using the obtained content key 2, device A can decrypt Content 2.

A device having obtained the root key from data 1 can use data 2 even if data 2 is obtained without authorization, such as data provided from another device by being recorded on a recording medium. Such unauthorized use of data hinders authorized content distribution. As a result, a content provider's profits that could have been made are lost.

US2004/255138 (treated as the English language equivalent of JP-A-2000/048076) discloses a system and method for distributing digital works. A ticket server apparatus, which manages usage conditions and ticket keys, issues a ticket containing a ticket key in the case of allowing a user to practise the usage requested by the user.

Disclosure of Invention

In view of the above-described circumstances, it is an object of the present invention to reliably prevent unauthorized use of content. The appended claims define an information processing apparatus, an information providing apparatus, a usage right management apparatus of the invention, as well as their corresponding methods, programs and recording mediums having the program thereon.

Brief Description of the Drawings

Fig. 1 is a schematic diagram showing known content decryption.
Fig. 2 is a diagram showing an example of the configuration of a content providing system according to the present invention.
Fig. 3 is a block diagram showing an example of the configuration of each client shown in Fig. 2.
Fig. 4 is a diagram showing the arrangement of keys.
Fig. 5 is a diagram showing category nodes.
Fig. 6 is a diagram showing an example of the association between a node and a device.

Fig. 7 is an illustration of an example of the structure of an enabling key block.

Fig. 8 is an illustration of another example of the structure of an enabling key block.

Fig. 9 is a schematic diagram of use of the enabling key block.

Fig. 10 is an illustration of an example of the format of an enabling key block.

Fig. 11 is a diagram describing the structure of each tag in the enabling key block.

Fig. 12 is a schematic diagram of division of key information according to the present invention.

Fig. 13 is a flowchart describing a service data obtaining process by the client shown in Fig. 2.

Fig. 14 is an illustration of an example of service data.

Fig. 15 is a flowchart describing a service data providing process by a license server shown in Fig. 2.

Fig. 16 is a flowchart describing a content generating process by a content server shown in Fig. 2.

Fig. 17 is an illustration of an example of the format of content.

Fig. 18 is a flowchart describing a sub-key obtaining process by the license server shown in Fig. 2.

Fig. 19 is a flowchart describing a downloading process by the client shown in Fig. 2.

Fig. 20 is a flowchart describing a content providing process by the content server shown in Fig. 2.

Fig. 21 is a flowchart describing a playing process by the client shown in Fig. 2.

Fig. 22 is a flowchart describing the details of the usage right obtaining process in step S73 of Fig. 21.

Fig. 23 is a flowchart describing a usage right providing process by the license server shown in Fig. 2.

Fig. 24 is an illustration of an example of a usage right.

Fig. 25 is a flowchart describing the details of the decrypting process in step S77 of Fig. 21.

Fig. 26 is a schematic diagram showing the process of Fig. 25.

Best Mode for Carrying Out the Invention

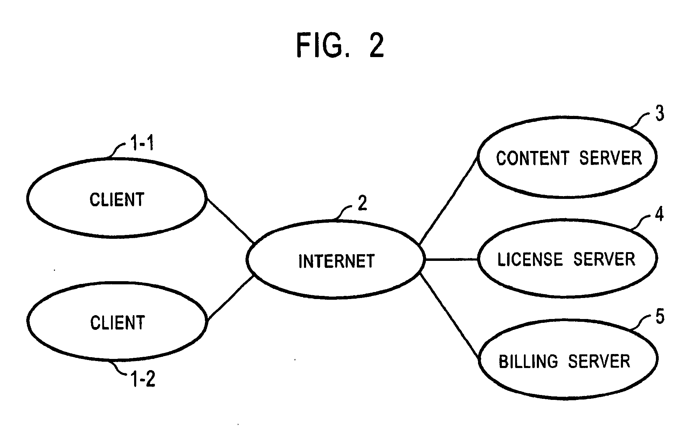

Fig. 2 shows the configuration of a content providing system according to the present invention. Clients 1-1 and 1-2 (hereinafter simply referred to as a client 1 whenever it is unnecessary to distinguish individual clients) are connected to the Internet 2. Although only two clients are shown in this example, an arbitrary number of clients may be connected to the Internet 2.

In addition, a content server 3 that provides content to the client 1, a license server 4 that grants the client 1 a necessary usage right for using the content provided by the content server 3, and a billing server 5 that bills the client 1 upon reception of the usage right by the client 1 are connected to the Internet 2.

An arbitrary number of each of the content server 3, the license server 4, and the billing server 5 are connected to the Internet 2.

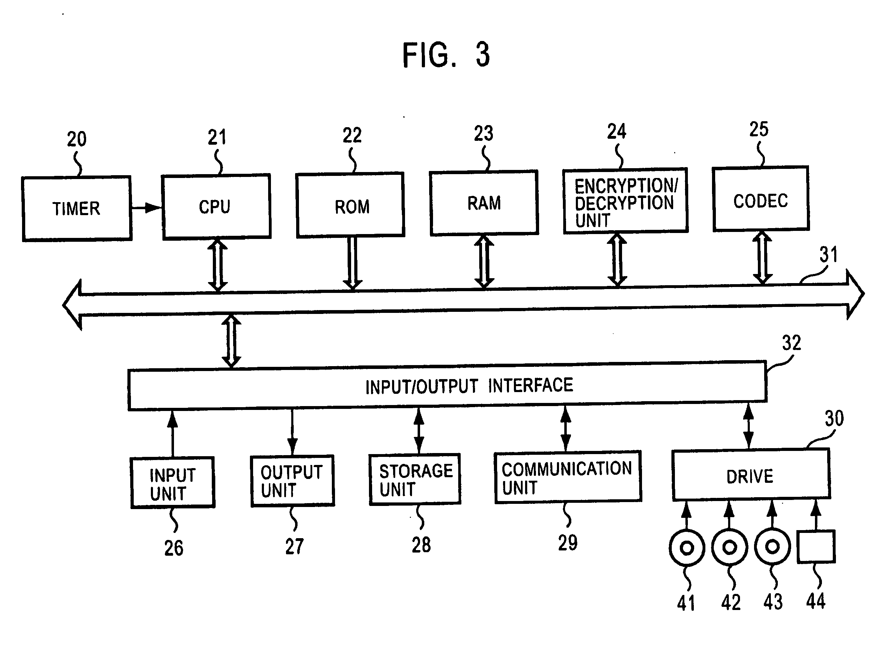

Fig. 3 shows the configuration of the client 1.

Referring to Fig. 3, a CPU (Central Processing Unit) 21 performs various processes in accordance with a program stored in a ROM (Read Only Memory) 22 or a program loaded from a storage unit 28 to a RAM (Random Access Memory) 23. A timer 20 keeps time and supplies time information to the CPU 21. The RAM 23 appropriately stores necessary data for performing various processes by the CPU 21.

An encryption/decryption unit 24 encrypts content and decrypts encrypted content. A codec 25 encodes content in, for example, ATRAC (Adaptive Transform Acoustic Coding) 3 and supplies and records the encoded content via an input/output interface 32 onto a semiconductor memory 44 connected to a drive 30. Also, the codec 25 decodes encoded data read from the semiconductor memory 44 via the drive 30. The semiconductor memory 44 includes, for example, a memory stick (trademark).

The CPU 21, the ROM 22, the RAM 23, the encryption/decryption unit 24, and the codec 25 are interconnected via a bus 31. Also, the input/output interface 32 is connected to the bus 31.

An input unit 26 including a keyboard, a mouse, and the like, an output unit 27 including a display, such as a CRT (Cathode Ray Tube) or an LCD (Liquid Crystal Display), a speaker, and the like, a storage unit 28 including a hard disk and the like, and a communication unit 29 including a modem, a terminal adapter, and the like are connected to the input/output interface 32. The communication unit 29 performs communication via the Internet 2. The communication unit 29 communicates analog signals or digital signals with another client.

Where necessary, the drive 30 is connected to the input/output interface 32. On the drive 30, a magnetic disk 41, an optical disk 42, a magneto-optical disk 43, or the semiconductor memory 44 is appropriately placed. Where necessary, a computer program read from the placed medium is installed on the storage unit 28.

Although not shown in the drawing, basically the content server 3, the license server 4, and the billing server 5 each have a configuration similar to that of the client 1 shown in Fig. 3. In the following description, the configuration shown in Fig. 3 may also be cited as the configuration of the content server 3, the license server 4, the billing server 5, and the like.

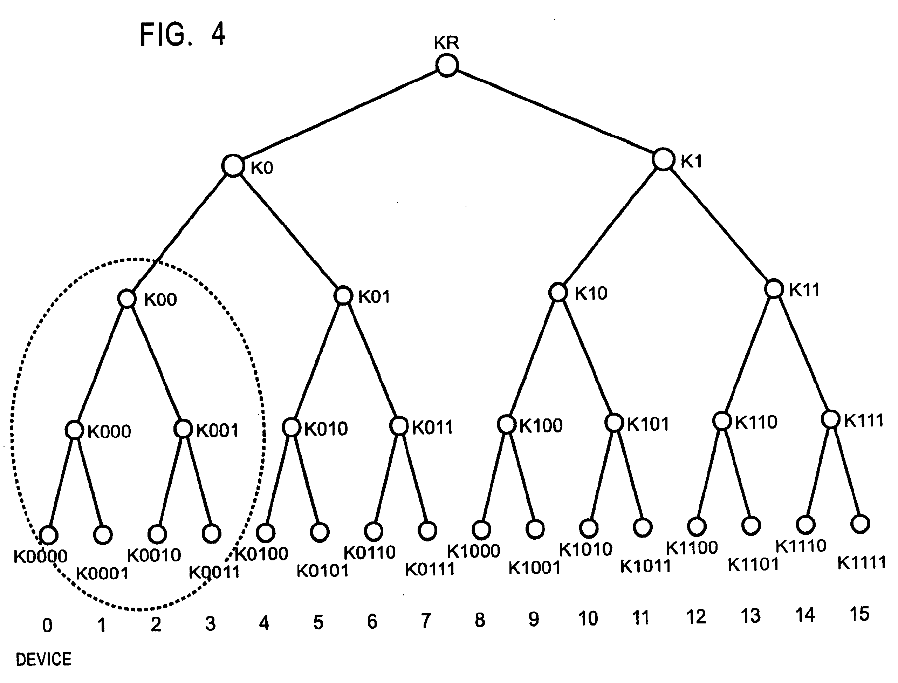

In the present invention, as shown in Fig. 4, devices and keys are managed on the basis of the principle of broadcast encryption. Keys are arranged in a hierarchical tree structure having leafs at the bottom level being associated with keys unique to individual devices. For hierarchical-tree-structure key management used in the system of the present invention, see Japanese Unexamined Patent Application Publication No. 2001-352321. In the example shown in Fig. 4, keys associated with 16 devices 0 to 15 are generated.

Each key is defined associated with a node of the tree structure, which is denoted by a circle in the illustration. In the example, a root key KR (also referred to as Kroot where necessary) is defined associated with a root node at the top level. Keys K0 and K1 are defined associated with nodes at the second level. Keys K00 to K11 are defined associated with nodes at the third level. Keys K000 to K111 are defined associated with nodes at the fourth level. Keys K0000 to K1111 are defined associated with leafs (device nodes) serving as nodes at the bottom level.

Since the keys are arranged in the hierarchical structure, for example, the key on top of key K0010 and key K0011 is K001, and the key on top of key K000 and K001 is K00. Similarly, the key on top of key K00 and key K01 is K0, and the key on top of K0 and K1 is KR.

A key for using content is managed by keys associated with nodes on a path from each device node (leaf) at the bottom level to the root node at the top level. For example, a device associated with leaf 3 manages a key for using content by keys K0011, K001, K00, K0, and KR on the corresponding path.

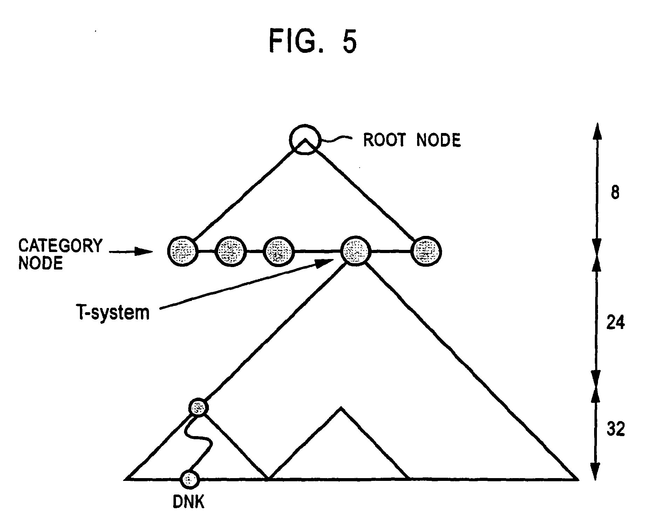

In the system of the present invention, as shown in Fig. 5, device keys and content keys are managed by a key system based on the principle shown in Fig. 4. In the example shown in Fig. 5, nodes at 8 + 24 + 32 levels are arranged in a tree structure, and nodes from the root node to nodes at the eighth level below the root node are associated with categories. The term category refers to, for example, the category of devices using semiconductor memories, such as memory sticks, or the category of devices receiving digital broadcast programs. One of these category nodes is associated with the present system serving as a system for managing usage rights (referred to as a T system where necessary).

Specifically, keys associated with nodes at 24 levels below the node associated with the T system are associated with service providers or services offered by the service providers. In the example shown in Fig. 5, $2^{24}$ (approximately 16 M) service providers or services can be defined. Using the bottom 32 levels, $2^{32}$ (approximately 4 G) users (clients 1) can be defined. Keys associated with nodes on a path from each node at the bottom level or the 32nd level to the node associated with the T system constitute a DNK (Device Node Key). The ID associated with each leaf at the bottom level is the leaf ID.

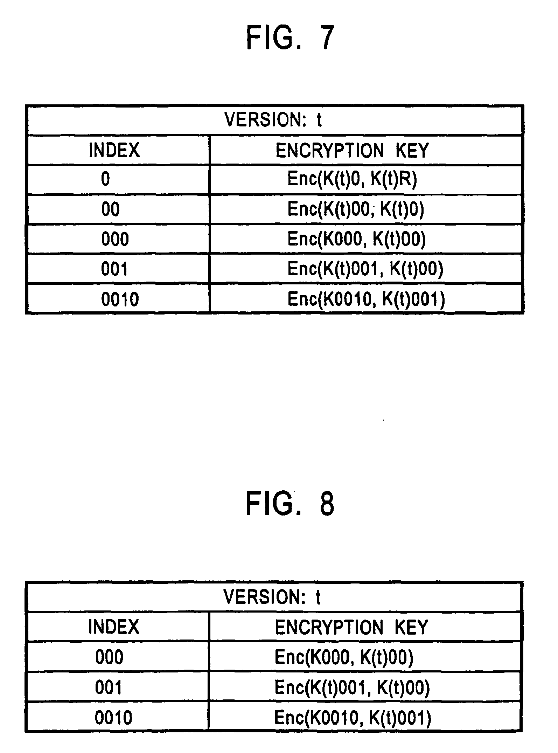

A content key that has encrypted content is encrypted by an updated root key KR'. An updated node key at a higher level is encrypted using an updated node key at a lower level, which is most adjacent to the updated node key at the higher level. This encrypted node key is arranged in an EKB (Enabling Key Block) (described hereinafter with reference to Fig. 7).

In the EKB, an updated node key at a level above the end of the EKB is encrypted by a node key or leaf key at the end of the EKB, and the encrypted node key is arranged in the EKB. Using any key included in the DNK described in service data, the client 1 decrypts an updated node key at a level higher than the used key, which is most adjacent to the used key and which is described in the EKB distributed along with content. Using the decrypted node key, the client 1 decrypts an updated node key at a level higher than this node key described in the EKB. The client 1 performs the similar processing one after another to obtain the updated root key KR'. The service data is supplied by the license server 4 at the time information on the client 1 is registered. A set of this service data and a usage right, which is information for permitting the use of particular content, which will be described later, is referred to as a license.

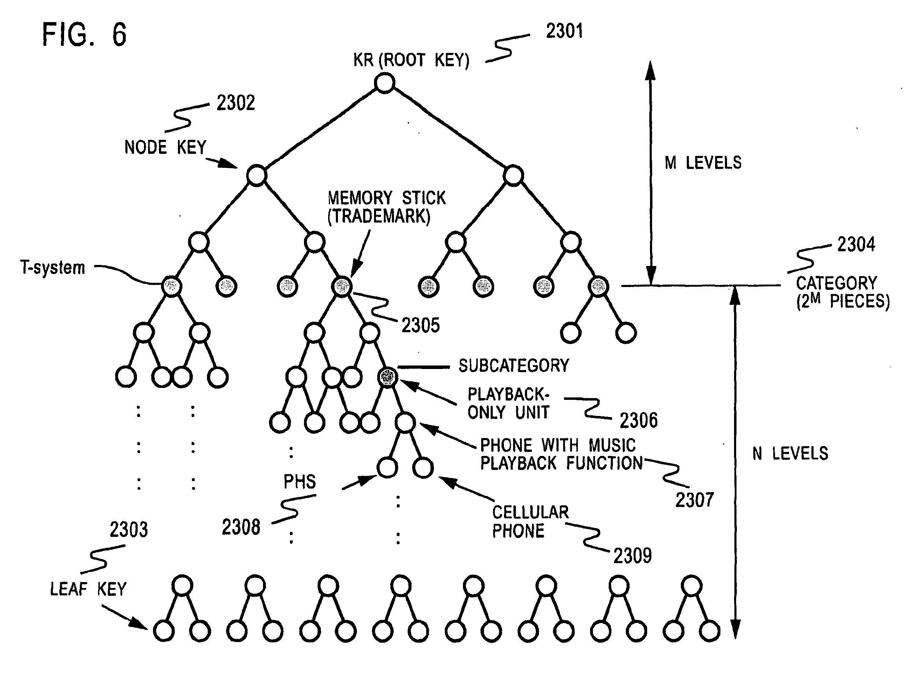

Fig. 6 shows a specific example of classification of categories in the hierarchical tree structure.

Referring to Fig. 6, root key KR2301 is set at the top level of the hierarchical tree structure; node keys 2302 are set at the intermediate levels below the top level; and leaf keys 2303 are set at the bottom level. Devices each hold a device node key (DNK) consisting of the corresponding leaf key, a series of node keys from the leaf key to the root key, and the root key.

Predetermined nodes at the M-th level from the top (M = 8 in the example shown in Fig. 5) are set as category nodes 2304. Specifically, nodes at the M-th level are set as device setup nodes belonging to specific categories. Let one node at the M-th level be the apex. Nodes and leafs at the (M+1)-th level and below are regarded as nodes and leafs concerning devices included in that category.

For example, a node 2305 at the M-th level in Fig. 6 is set to the category [memory stick (trademark)]. A series of nodes and leafs below the node 2305 is set as nodes and leafs dedicated to this category including various devices using memory sticks. Specifically, nodes and leafs below the node 2305 are defined as a set of nodes and leafs associated with devices defined belonging to the category "memory stick".

A node at a level a few levels below the M-th level is set as a subcategory node 2306. In the example of Fig. 6, the [playback-only unit] node 2306 is set at a level two levels below the category [memory stick] node 2305. The [playback-only unit] node 2306 is a subcategory node included in the category of devices using memory sticks. Below the playback-only unit node 2306 serving as the subcategory node, a node 2307 is set associated with a phone with a music playback function, which is included in the category of playback-only units. Below the node 2307, a [PHS] node 2308 and a [cellular phone] node 2309 are set, which are included in the category of phones with a music playback function.

Categories and subcategories may be set associated not only with the types of devices, but also with, for example, nodes managed independently by a particular manufacturer, content provider, payment institute, etc., that is, in arbitrary units of, for example, processes, jurisdiction sections, or services provided (hereinafter these are collectively referred to as entities).

For example, let one category node be the apex node dedicated to game machines XYZ sold by a game machine manufacturer. Each of the game machines XYZ sold by the manufacturer may store node keys and leaf keys at levels below the apex node. Subsequently, generation and distribution of an EKB including these node keys and leaf keys below the apex node key enable distribution of encrypted content and distribution and updating of various keys to only those devices (game machines XYZ) that are below the apex node.

Specifically, a key may be updated without influencing devices that do not belong to the apex node and that belong to a node of another category.

When it becomes apparent at a particular time t that keys K0011, K001, K00, K0, and KR held by a device 3 are analyzed by a hacker and exposed to the outside, the device 3 needs to be separated from the system (group of devices 0, 1, 2, and 3) to subsequently protect data transferred within the system. To this end, the node keys K001, K00, K0, and KR need to be updated to new keys K(t)001, K(t)00, K(t)0, and K(t)R, respectively, and these updated keys need to be sent to the devices 0, 1, and 2. In this example, K(t)aaa indicates an updated key Kaaa in the generation t.

A method of distributing updated keys will now be described. Keys are updated by supplying, for example, a table including an EKB to the devices 0, 1, and 2 via a network or a predetermined recording medium having the table stored therein. The EKB includes encryption keys for distributing new updated keys to devices associated with leafs (nodes at the bottom level) included in the tree structure shown in Fig. 4.

The EKB shown in Fig. 7 includes block data having a data structure that can be updated only by devices for which node keys need to be updated. In the example of Fig. 7, the block data is created to distribute the updated node keys in the generation t to the devices 0, 1, and 2 in the tree structure shown in Fig. 4.

As is clear from Fig. 4, the updated node keys K(t)00, K(t)0, and K(t)R need to be provided to the devices 0 and 1, whereas the updated node keys K(t)001, K(t)00, K(t)0, and K(t)R need to be provided to the device 2.

As shown by the EKB in Fig. 7, the EKB includes a plurality of encryption keys. For example, the encryption key at the bottom level of Fig. 7 is Enc(K0010, K(t)001), which is the updated node key K(t)001 encrypted by the leaf key K0010 held by the device 2. The device 2 decrypts this encryption key using the leaf key K0010 held by itself to obtain the updated node key K(t)001.

Using the updated node key K(t)001 obtained by decryption, the device 2 decrypts the encryption key Enc(K(t)001, K(t)00) at the second level from the bottom of Fig. 7 to obtain the updated node key K(t)00.

Similarly, the device 2 decrypts the encryption key Enc(K(t)00, K(t)0) at the second level from the top of Fig. 7 to obtain the updated node key K(t)0. Using the updated node key K(t)0, the device 2 decrypts the encryption key Enc(K(t)0, K(t)R) at the first level from the top of Fig. 7 to obtain the updated root key K(t)R.

In contrast, the node key K000 is not included in the keys to be updated. The nodes 0 and 1 have the following node keys to be updated: K(t)00, K(t)0, and K(t)R.

The nodes 0 and 1 each use the device keys K0000 and K0001 to decrypt the encryption key Enc(K000, K(t)00) at the third level from the top of Fig. 7 to obtain the updated node key K(t)00. Similarly, the nodes 0 and 1 each decrypt the encryption key Enc(K(t)00, **K(t)0**) at the second level from the top of Fig. 7 to obtain the updated node key K(t)0. Furthermore, the nodes 0 and 1 each decrypt the encryption key Enc(K(t)0, K(t)R) at the first level from the top of Fig. 7 to obtain the updated root key K(t)R. In this manner, the devices 0, 1, and 2 each obtain the updated key K(t)R.

Indices in Fig. 7 denote the absolute addresses of node keys and a leaf key used as decryption keys for decrypting the encryption keys shown on the right of Fig. 7.

When the node keys K(t)0 and K(t)R at the upper levels of the tree structure shown in Fig. 4 need not be updated and when only the node key K00 needs to be updated, an EKB in Fig. 8 is used to distribute the updated node key K(t)00 to the devices 0, 1, and 2.

The EKB shown in Fig. 8 can be used to distribute, for example, a new content key to be shared by a specific group.

For example, assume that the devices 0, 1, 2, and 3 included in a group denoted by the dotted-chain line of Fig. 4 each use a particular recording medium and that a new common content key K(t)con must be set to these devices. In this case, encrypted data Enc(K(t)00, K(t)con) is distributed along with the EKB shown in Fig. 8. The encrypted data Enc(K(t)00, K(t)con) is produced by encrypting the new common updated content key K(t)con using K(t)00, which has updated the node key K00 shared by the devices 0, 1, 2, and 3. By this distribution, data that cannot be decrypted by a device, such as a device 4, belonging to another group is distributed.

Specifically, the devices 0, 1, and 2 each decrypt the encrypted data using the key K(t)00 obtained by processing the EKB, thereby obtaining the content key K(t)con at the time t.

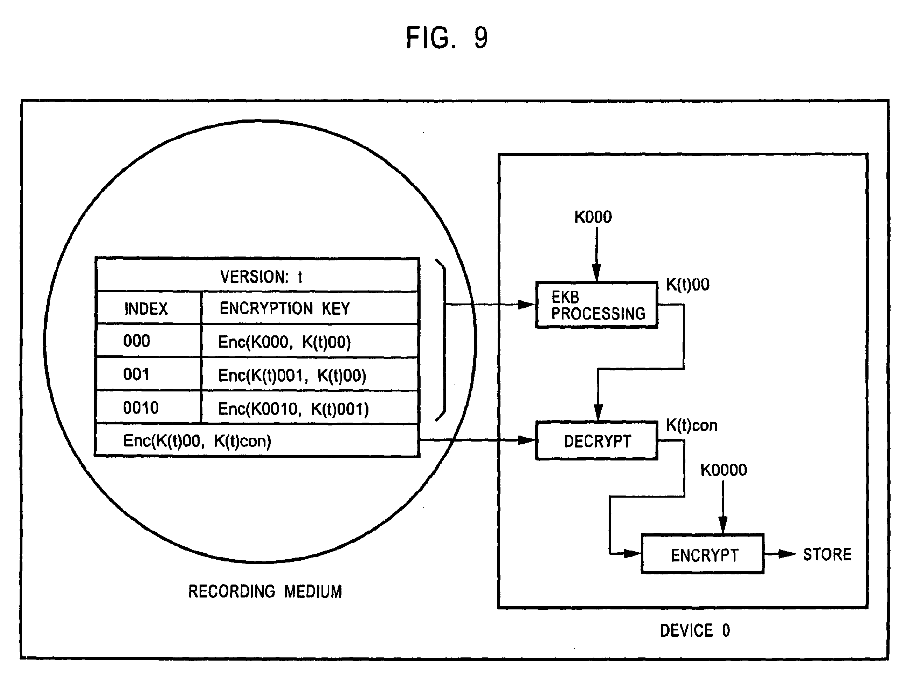

Fig. 9 is a schematic diagram showing an example of a process of obtaining the content key K(t)con at the time t, which is performed by the device 0 to which the encrypted data Enc(K(t)00, K(t)con), which is produced by encrypting the new common content key K(t)con using K(t)00, and the EKB shown in Fig. 8 are provided via a predetermined recording medium. Specifically, in the example of Fig. 9, message data encrypted by the EKB is the content key K(t)con.

As shown in Fig. 9, the device 0 uses the EKB in the generation t, which is stored in the recording medium, and the node key K000, which is prepared in the device 0, to generate the node key K(t)00 by the above-described EKB processing (decrypting keys one after another). Using the decrypted updated node key K(t)00, the device 0 decrypts the updated content key K(t)con. To use the decrypted updated content key K(t)con afterwards, the device 0 encrypts the updated content key K(t)con using the leaf key K0000, which is held only by the device 0, and stores the encrypted content key K(t)con.

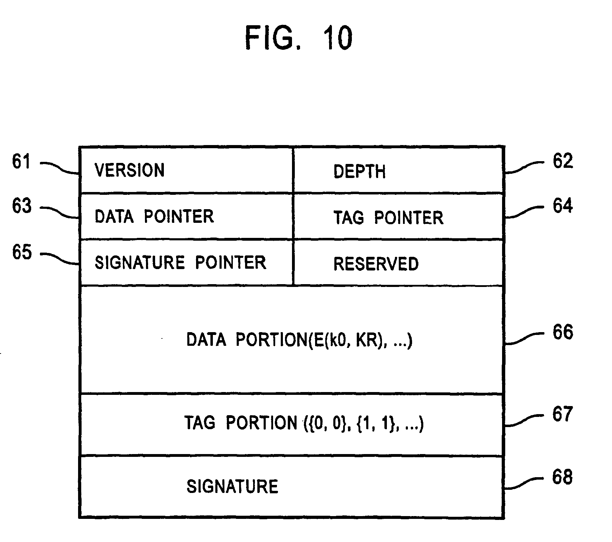

Fig. 10 shows an example of the format of the EKB. The EKB including various types of information is included in the header of content data.

A version 61 is an identifier indicating the version of the EKB. The version 61 has a function of identifying the most recent EKB and a function of indicating the association relationship between the EKB and the content. A depth 62 indicates the number of levels of the hierarchical tree associated with a device to which the EKB is distributed. A data pointer 63 is a pointer indicating the position of a data portion 66 of the EKB. A tag pointer 64 and a signature pointer 65 are pointers indicating the positions of a tag portion 67 and a signature 68, respectively.

The data portion 66 stores, for example, data produced by encrypting node keys to be updated. For example, the data portion 66 stores the encryption keys, as shown in Fig. 9, concerning the updated node keys.

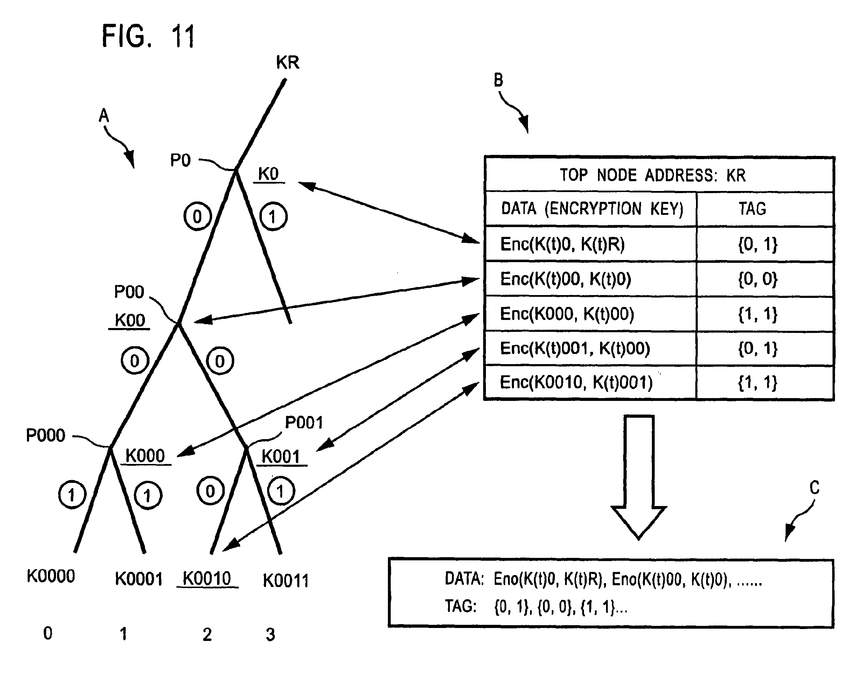

The tag portion 67 includes tags indicating the positional relationship among the encrypted node keys and leaf key stored in the data portion 66. A rule of attaching the tags will be described with reference to Fig. 11.

In the example of Fig. 11, data to be transmitted includes, as shown in Fig. 11B, the encryption keys in Fig. 7. The address of a top node included in the encryption keys is referred to as the top node address.

Since the data includes the updated root key K(t)R in this example, the top node address is KR. For example, the data at the top level Enc(K(t)0, K(t)R) is associated with the position P0 shown in the hierarchical tree shown in Fig. 11A. Data at the subsequent level is Enc(K(t)00, K(t)0) associated with the position P00 in the lower left of the previous data Enc(K(t)0, K(t)R) in the tree.

Specifically, when there is data positioned below a predetermined position in the tree structure, the tag is set to 0. Otherwise, the tag is set to 1. The tag is set as {left (L) tag, right (R) tag}.

Since there is data at the position P00 in the lower left of the position **P0** associated with the data at the top level Enc(K(t)0, K(t)R) in Fig. 11B, L tag = 0. Since there is no data in the lower right of the position P0, R tag = 1. In this manner, all pieces of data are tagged, thus forming a data sequence and a tag sequence shown in Fig. 11C.

The tag is attached indicating the position of the corresponding data Enc(Kxxx, Kyyy) in the tree structure. Pieces of key data Enc(Kxxx, Kyyy) ... stored in the data portion 66 are simply a series of pieces of encrypted key data. When the key data is tagged as described above, the position in the tree of each encryption key stored as the data becomes detectable. Instead of tagging the data, as shown in Fig. 7 or 8, the data structure may be defined by, for example, the following node indices associated with the encrypted data:

$$0: Enc(K(t)0, K(t)R)$$
$$00: Enc(K(t00, K(t)0)$$
$$000: Enc(K((t)000, K(t)00)$$
$$...$$

When the structure is defined using such indices, the amount of data increases, which is not desirable in distribution via a network or the like. In contrast, when the above-described tags are used as index data indicating the positions of the keys, the positions of the keys become detectable with a smaller amount of data.

Referring back to the description of Fig. 10, the signature 68 is a digital signature created by, for example, a key management center (license server 4), a content provider (content server 3), a payment institute (billing server 5), etc., which has issued the EKB. A device having received the EKB verifies the signature included in the EKB to determine whether the obtained EKB is issued by an authenticate issuer.

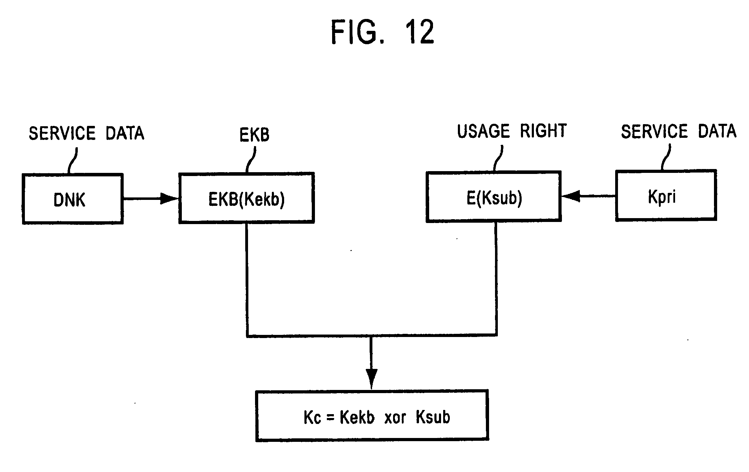

Fig. 12 is a schematic diagram showing a process upto the obtaining, by the client 1, of a content key Kc for decrypting content in the above-described key management system.

A DNK shown in the left end of Fig. 12 is included in service data created at the time of registration and provided from the license server 4 to the client 1. As will be described later, the service data includes a private key Kpri peculiar to the client 1, and this key information is also provided (right end of Fig. 12).

The client 1 obtains a particular piece of content and a usage right for using this piece of content. In this usage right, rules for using the content are described. When the client 1 starts using the content in response to a user instruction, the client 1 uses the DNK obtained from the service data to obtain an EKB key Kekb of the content. Also, the client 1 obtains a sub key Ksub included in the usage right, which is associated with the EKB key Kekb, using the private key Kpri obtained from the service data. Referring to Fig. 12, the EKB (Kekb) indicates that the EKB key Kekb is encrypted by a root key Kroot included in the EKB.

Having obtained the EKB key Kekb and the sub key Ksub, the client 1 generates a content key Kc for decrypting the content by computing the exclusive OR of these pieces of key information. Using the generated content key Kc, the client 1 decrypts the content (content data).

With the content key Kc generated on the basis of the EKB key Kekb included in the EKB and the sub key Ksub included in the usage right, the content becomes available for use (key information is divided and provided to the client 1). Even when information included in the EKB is read, the content cannot be used only with the key information described in the EKB. In other words, the EKB (content), the usage right for using the content, and the service data are required to use the content.

With reference to flowcharts, processes by the client 1, the content server 3, and the license server 4 upto using content on the basis of divided and provided key information will now be described.

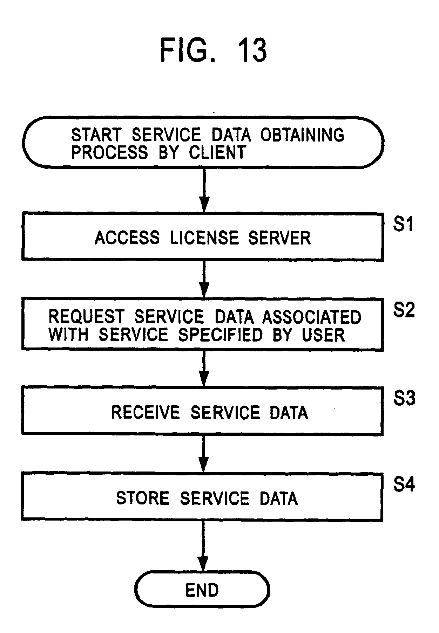

With reference to the flowchart of Fig. 13, a service data obtaining process by the client 1 will now be described.

When the input unit 26 is operated by a user to instruct the client 1 to access the license server 4, in step S1, the CPU 21 of the client 1 controls the communication unit 29 to access the license server 4 via the Internet 2. In step S2, when the input unit 26 is operated by the user to specify a service to be provided, the CPU 21 receives the specification information and requests service data for using the specified service from the license server 4.

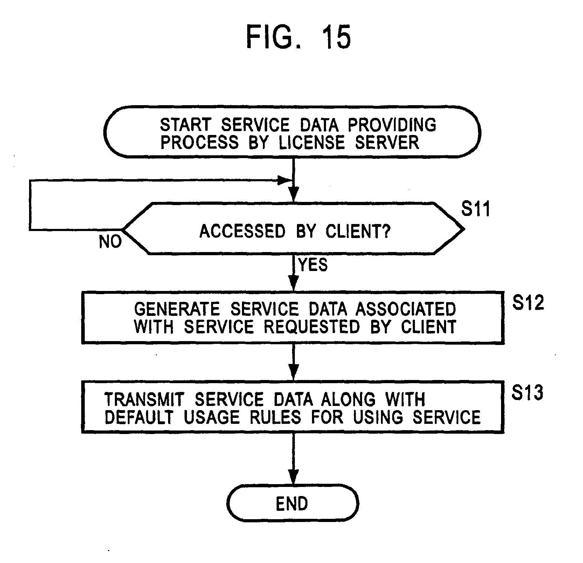

As will be described below with reference to the flowchart of Fig. 15, the license server 4 having received the request transmits the service data. In step S3, the CPU 21 receives the service data transmitted from the license server 4. In step S4, the CPU 21 stores the service data in the storage unit 28 including the hard disk or the like.

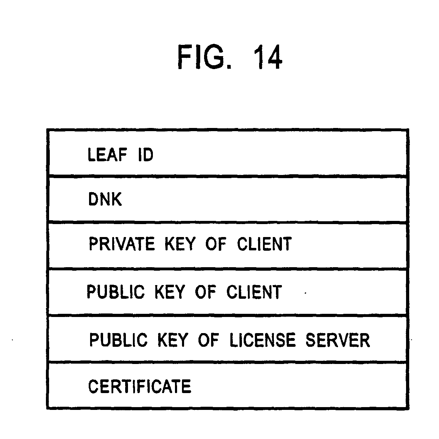

Fig. 14 is an illustration of an example of service data provided to the client 1.

As shown in Fig. 14, the service data includes the leaf ID for identifying the client 1, a DNK for decrypting key information described in the EKB, a private key Kpri that is given individually to the client 1, and a public key Kpub associated with the private key Kpri. The service data also includes a public key of the license server 4, which is associated with a private key held by the license server 4, and a certificate of the service data.

With reference to the flowchart of Fig. 15, a service data providing process by the license server 4, which is performed in association with the process shown in Fig. 13, will now be described.

In step S11, the CPU 21 of the license server 4 determines whether the license server 4 has been accessed by the client 1. The license server 4 is queued in step S11 until it is determined that the license server 4 has been accessed by the client 1. When the CPU 21 of the license server 4 determines in step S11 that the license server 4 has been accessed by the client 1, in step S12, the license server 4 generates service data for using the service requested by the client 1. In the service data, various types of information shown in Fig. 14 are described.

In step S13, the CPU 21 of the license server 4 controls the communication unit 29 to transmit the service data generated in step S12, along with information indicating default usage rules for using the service, to the client 1.

With the above-described processes, the client 1 obtains the service data. Alternatively, instead of the service data being provided to the client 1 by the above-described processes, the service data may be provided to the user of the client 1 by storing the service data in advance in the client 1 (embedded at the time the client 1 is manufactured).

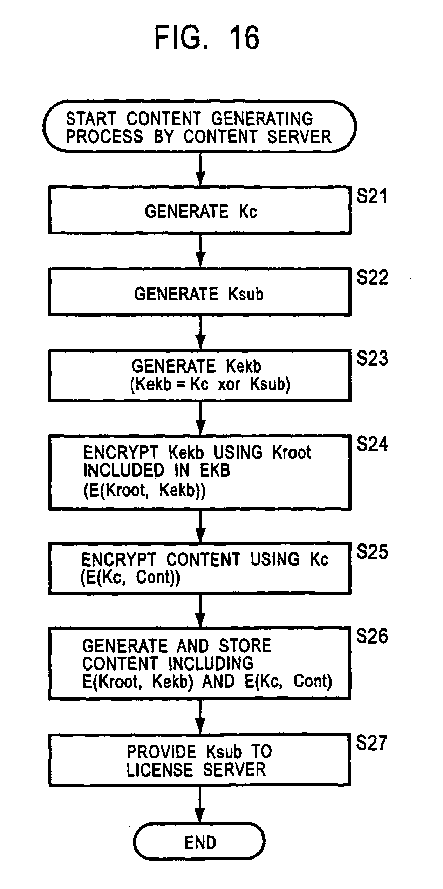

With reference to the flowchart of Fig. 16, a process of generating content, which is to be provided to the client 1, by the content server 3 will now be described. Content data, such as music data or video data included in content provided by the content server 3, is provided in a content holder (not shown).

In step S21, the CPU 21 of the content server 3 generates a content key Kc for encrypting content (content data) to be provided to the client 1. In step S22, the CPU 21 generates a sub key Ksub required to generate the content key Kc by the client 1. As described above, the sub key Ksub is included in the usage right and provided by the license server 4 to the client 1.

In step S23, the CPU 21 generates an EKB key Kekb that enables the client 1 to generate the content key Kc on the basis of the sub key Ksub and the EKB key Kekb. Specifically, the CPU 21 computes the exclusive OR of the content key Kc generated in step S21 and the sub key Ksub generated in step S22 and regards the computed exclusive OR as the EKB key Kekb.

In step S24, the CPU 21 encrypts the EKB key Kekb generated in step S23 using a root key Kroot included in the EKB to obtain E(Kroot, Kekb). In step S25, the CPU 21 encrypts the content to be provided to the client 1 using the content key Kc generated in step S21 to obtain E(Kc, Cont).

In step S26, the CPU 21 generates content whose format includes E(Kroot, Kekb) obtained in step S24 and E(Kc, Cont) obtained in step S25 and stores the generated content in the storage unit 28.

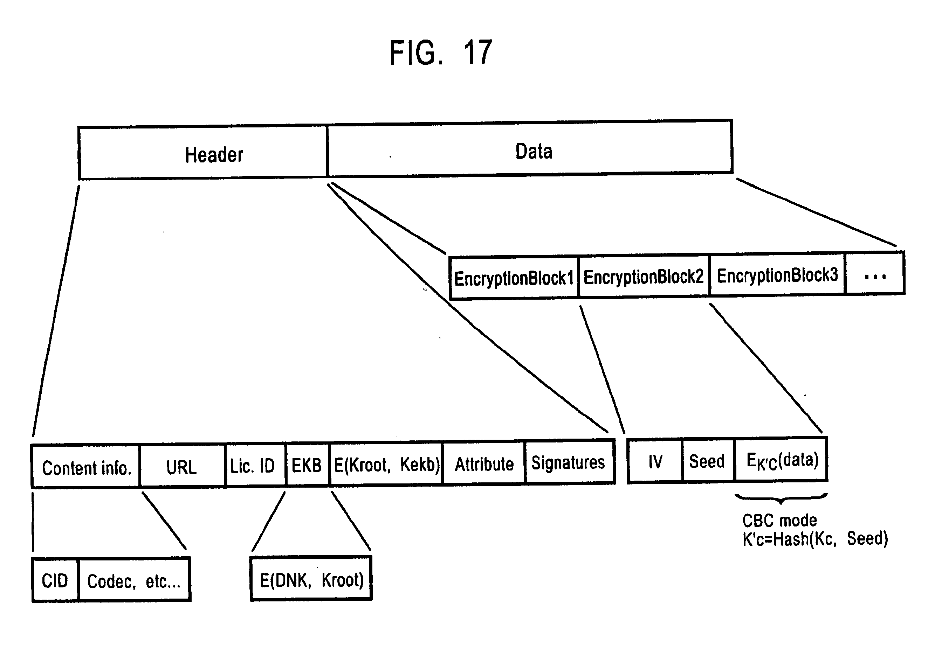

Fig. 17 is an illustration of an example of the format of the content generated by the content server 3.

As shown in Fig. 17, basically the content includes the header and data (content data).

The header includes content information, URL (Uniform Resource Locator), license ID, EKB including Kroot encrypted by the DNK provided to the client 1, E (Kroot, Kekb) produced by encrypting the EKB key Kekb by Kroot obtained from the EKB, attribute information indicating attributes of the content, and signatures of the header.

The content information includes the content ID (CID) for identifying the content stored as data and information indicating the codec format of the content.

The URL indicates the address of the license server 4 to be accessed to obtain a necessary usage right for using the content. The attributes of the content include the content ID, record company ID serving as identification information for identifying the provider of the content, artist ID serving as identification information for identifying the artist, and unique ID. In this embodiment, the attributes are used to specify the content to be used by the usage right.

The data includes an arbitrary number of encryption blocks. Each of the encryption blocks includes an initial vector (IV), seed, and data $E_{K'c}(\text{data})$ produced by encrypting the content using a key K'c.

The Key K'c is, as shown by the following equation, a value computed by applying the content key Kc and the random-number seed to a hash function:

$$\texttt{K'c = Hash(Kc, Seed)}$$

The initial vector IV and the seed are set to different values in each encryption block.

For example, the content is encrypted in units of eight bytes. The content is encrypted in a CBC (Cipher Block Chaining) mode in which the subsequent eight bytes are encrypted using the result of encryption of the previous eight bytes.

In the CBC mode, when the first eight bytes of content are to be encrypted, there is no result of encryption of eight bytes prior to these first eight bytes. The first eight bytes of content are thus encrypted using the initial vector IV serving as initial values.

With the encryption in the CBC mode, even when one encryption block is decrypted, its influence does not extend to the other encryption blocks. Alternatively, the content may be encrypted in another encryption mode.

When the content is formatted as described above, the client 1 having obtained the content decrypts the root key Kroot using the DNK obtained in advance from the service data and then decrypts the EKB key Kekb using the obtained root key Kroot. On the basis of the EKB key Kekb and the sub key Ksub included in the usage right, the client 1 generates a content key Kc and uses the content key Kc to decrypt the content.

Referring back to the description of Fig. 16, in step S27, the CPU 21 of the content server 3 provides the sub key Ksub generated in step S22 to the license server 4 via the

Internet 2 or a predetermined recording medium.

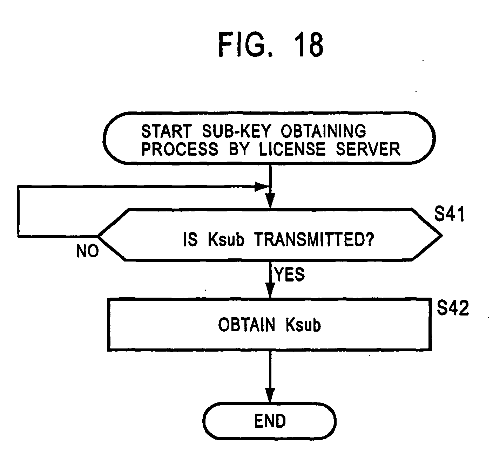

In response to the sub key Ksub provided by the content server 3, the license server 4 performs a process shown in the flowchart of Fig. 18.

In step S41, the CPU 21 of the license server 4 determines whether the sub key Ksub has been obtained from the content server 3. The CPU 21 is queued until it is determined that the sub key Ksub has been obtained. For example, when it is determined that information indicating the sub key Ksub has been transmitted via the Internet 2, in step S42, the CPU 21 obtains this information. The obtained sub key Ksub is stored in the storage unit 28. When the client 1 requests a usage right, a usage right including the sub key Ksub is provided to the client 1.

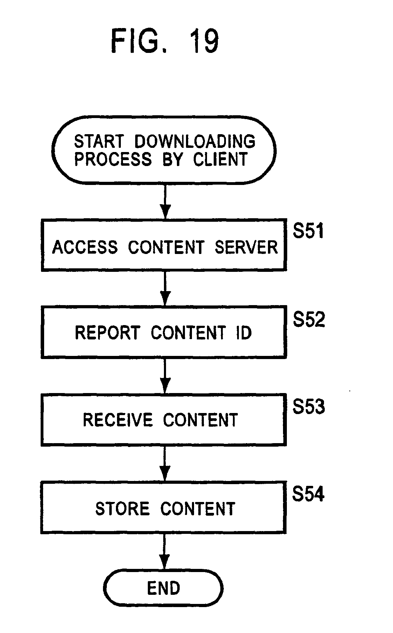

With reference to the flowchart of Fig. 19, a process of receiving, by the client 1, the content provided by the content server 3 will now be described.

When the user instructs the client 1 to access the content server 3, in step S51, the CPU 21 of the client 1 accesses the content server 3. In step S52, when the user operates the input unit 26 to specify content to be provided, the CPU 21 receives this specification information and notifies the content server 3 of the content ID of the specified content.

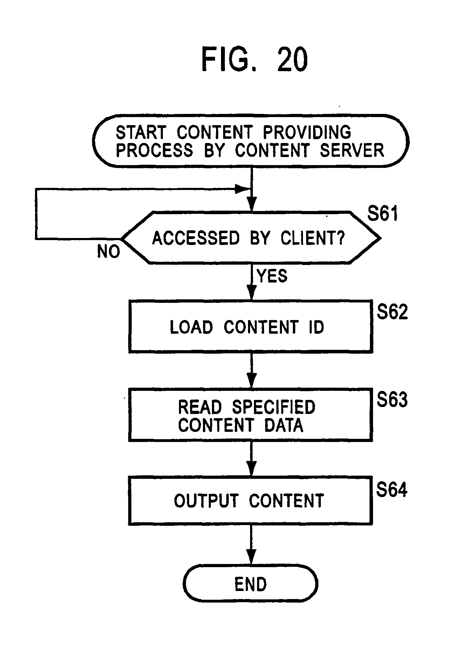

As will be described below with reference to the flowchart of Fig. 20, the content server 3 having been notified of the content ID transmits the content. In step S53, the CPU 21 receives the transmitted content. In step S54, the CPU 21 stores the content in the storage unit 28.

With reference to the flowchart of Fig. 20, a content providing process by the content server 3, which is performed in association with the process by the client 1, which is shown in Fig. 19, will now be described.

In step S61, the CPU 21 of the content server 3 is queued until the content server 3 is accessed by the client 1. When it is determined that the content server 3 has been accessed by the client 1, in step S62, the content server 3 loads the content ID transmitted by the client 1. This content ID is the information notified by the client 1 in step S52 of Fig. 19.

In step S63, the CPU 21 of the content server 3 reads, from content data stored in the storage unit 28, content data specified by the content ID loaded by the processing in step S62. In step S64, the CPU 21 controls the communication unit 29 to transmit content including the read content data to the client 1 having requested the content.

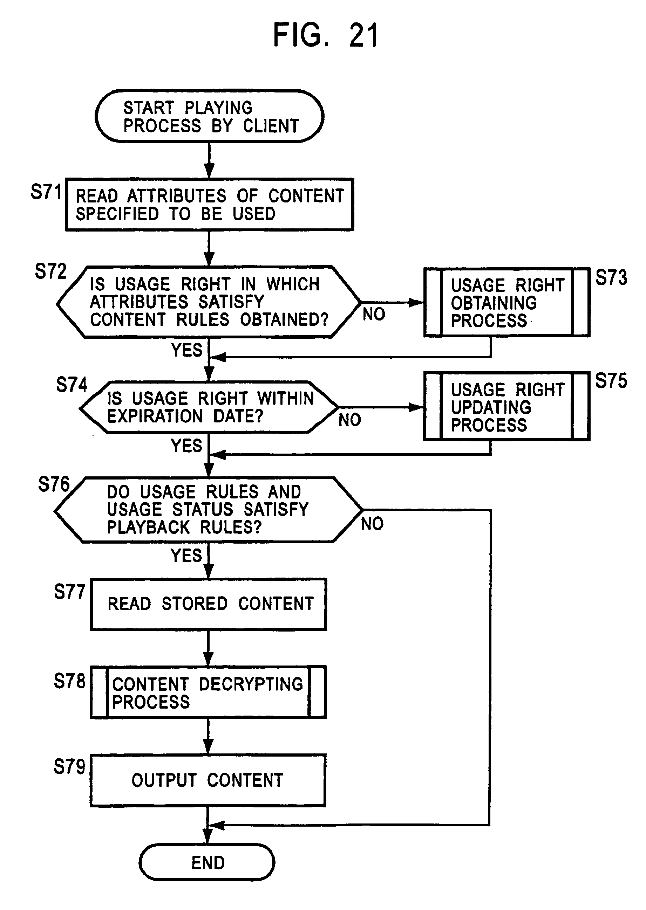

With reference to the flowchart of Fig. 21, a content playing process by the client 1 will now be described.

In step S71, the CPU 21 of the client 1 obtains the content identifying information (CID) specified by the user by operating the input unit 26. The CID includes, for example, the title of the content, the number attached to each piece of the stored content, and the like. When the content is specified, the CPU 21 reads attributes of the content. The attributes are, as shown in Fig. 17, described in the header of the content.

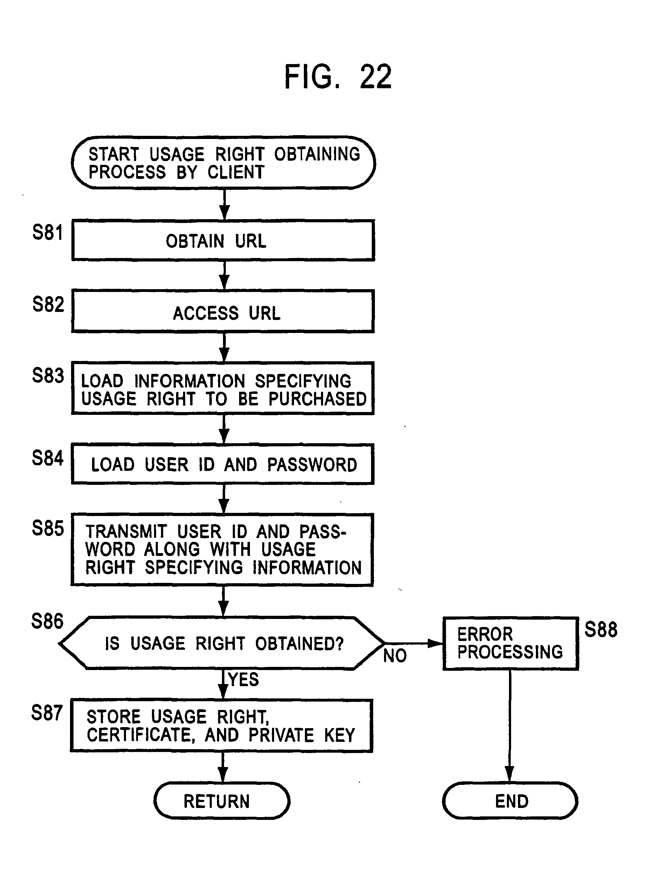

In step S72, the CPU 21 determines whether the client 1 has already obtained a usage right whose content rules included therein are satisfied by the attributes read in step S71 and has already stored this usage right in the storage unit 28. When such a usage right has not been obtained yet, in step S73, the CPU 21 performs a usage right obtaining process. The details of the usage right obtaining process will be described below with reference to the flowchart of Fig. 22.

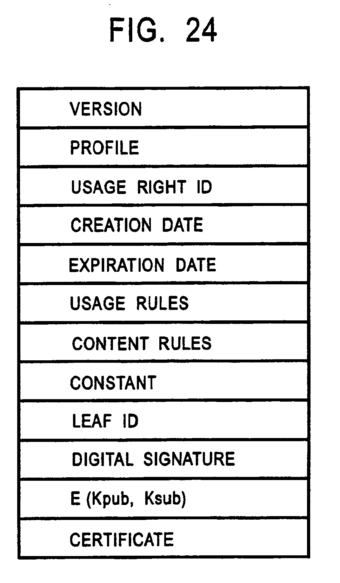

When it is determined in step S72 that the usage right has already been obtained, or when the usage right obtaining process is performed in step S73 and the usage right is obtained, in step S74, the CPU 21 determines whether the obtained usage right is within its expiration date. Whether the usage right is within the expiration date is determined by comparing the expiration date described in the usage right (see Fig. 24) with the current date and time kept by the timer 20.

When it is determined that the expiration date of the usage right has already passed, in step S75, the CPU 21 performs a usage right updating process. The usage right updating process performed in step S75 is basically similar to the usage right obtaining process performed in step S73.

When it is determined in step S74 that the usage right is within the expiration date, or when the usage right is updated in step S75, in step S76, the CPU 21 reads the usage rules included in the usage right and the usage status, which are stored in the storage unit 28, and determines whether playback rules are satisfied by the usage rules and the usage status.

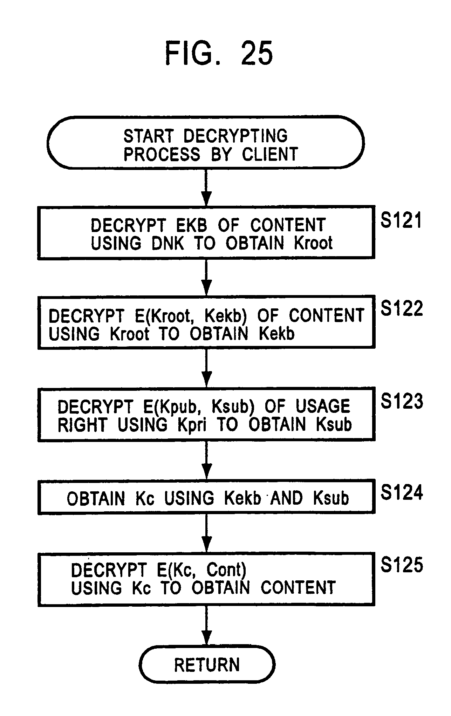

When it is determined in step S76, on the basis of the usage rules included in the usage right and the usage status, that the content is permitted to be played, in step S77, the CPU 21 reads the content from the storage unit 28 and stores the content in the RAM 23. In step S78, the CPU 21 performs a process of decrypting the content stored in the RAM 23. This content decrypting process performed in step S78 will be describe below with reference to the flowchart of Fig. 25.

In step S79, the CPU 21 supplies the content decrypted by the encryption/decryption unit 24 to the codec 25 to be decoded. The CPU 21 supplies the data decoded by the codec 25 to the output unit 27 via the input/output interface 32, converts the data (digital data) into analog data, and outputs the analog data via the speaker.

With reference to the flowchart of Fig. 22, the usage right obtaining process performed in step S73 of Fig. 21 will be described in detail.

In step S81, the CPU 21 of the client 1 obtains the URL described in the header of the content. As described above, the URL indicates the address of the license server 4 to be accessed to obtain a necessary usage right for using the content. In step S82, the CPU 21 controls the communication unit 29 to access the URL obtained in step S81, that is, the license server 4.

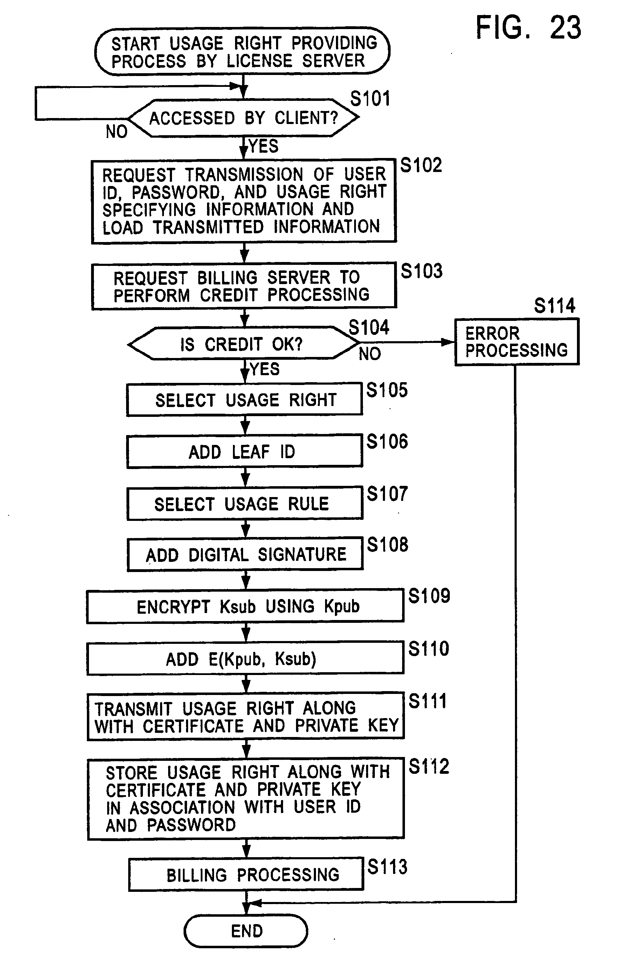

In response to the access, the license server 4 requests the client 1 to input usage right specifying information for specifying the usage right to be purchased (necessary usage right for using the content), user ID, and password (step S102 of Fig. 23 described below). The CPU 21 displays the request on the display unit of the output unit 27. On the basis of the displayed request, the user operates the input unit 26 to input the usage right specifying information, user ID, and password. The user ID and password are obtained in advance by the user of the client 1 by accessing the license server 4 via the Internet 2.

In step S83, the CPU 21 loads the usage right specifying information input by the input unit 26. In step S84, the CPU 21 loads the user ID and password. In step S85, the CPU 21 controls the communication unit 29 to transmit the input user ID, password, and usage right specifying information, and a usage right request including the leaf ID included in the service data to the license server 4.

As will be described below with reference to Fig. 23, the license server 4 transmits the usage right, which has been generated on the basis of the user ID, password, and usage right specifying information (step S111). Alternatively, if the rules are not satisfied, the license server 4 transmits no usage right (step S114).

In step S86, the CPU 21 determines whether the usage right has been transmitted from the license server 4. When it is determined that the usage right has been transmitted, in step S87, the CPU 21 stores the received usage right in the storage unit 28.

When it is determined in step S86 that no usage right is transmitted, in step S88, the CPU 21 performs the error processing, such as prohibiting the content playing process.

Alternatively, each user may perform the usage right obtaining process shown in Fig. 22 prior to obtaining the content.

With reference to the flowchart of Fig. 23, the usage right providing process by the license server 4, which is performed in association with the usage right obtaining process by the client 1, which is shown in Fig. 22, will now be described.

In step S101, the CPU 21 of the license server 4 is queued until the license server 4 is accessed by the client 1. When the license server 4 is accessed by the client 1, in step S102, the CPU 21 transmits a list of usage rights, including information concerning each usage right, to the client 1 having accessed the license server 4. Also, the CPU 21 of the license server 4 requests the client 1 to transmit the user ID, password, and usage right specifying information. When the client 1 transmits the user ID, password, leaf ID, and usage right specifying information (may be the usage right ID) (the processing in step S85 of Fig. 22), the CPU 21 of the license server 4 loads these pieces of information via the communication unit 29.

In step S103, the CPU 21 of the license server 4 accesses the billing server 5 via the communication unit 29 and requests the billing server 5 to perform the credit processing of the user associated with the user ID and password. In response to the credit processing request from the license server 4 via the Internet 2, the billing server 5 investigates the past payment record of the user associated with the user ID and password and determines whether the user has failed to pay the fee for a usage right. If no such record exists, the CPU 21 transmits the credit result allowing the grant of the usage right. If a payment failure record exists, the CPU 21 transmits the credit result prohibiting the grant of the usage right. The user of the client 1 has registered beforehand, in the billing server 5, the user's user ID, password, and information indicating the bank to be billed.

In step S104, the CPU 21 of the license server 4 determines whether the credit result from the billing server 5 allows the grant of the usage right. When the grant of the usage right is allowed, in step S105, the CPU 21 obtains, from usage rights stored in the storage unit 28, the usage right associated with the usage right specifying information loaded by the processing in step S102. Each of the usage rights stored in the storage unit 28 includes information, such as the usage right ID, version, creation date, and expiration date.

In step S106, the CPU 21 adds the leaf ID notified by the client 1 to the usage right. In step S107, the CPU 21 selects the usage rule associated with the usage right selected in step S105. When the user has specified the usage rule in step S102, the specified usage rule is added to the prepared usage rules. The CPU 21 adds the selected usage rule to the usage right. Alternatively, the usage rule may be added in advance to the usage right.

In step S108, the CPU 21 signs the usage right using the private key of the license server 4.

In step S109, the CPU 21 encrypts the sub key Ksub notified by the content server 3 using the public key Kpub of the license server 4, which is associated with the private key Kpri of the client 1 (Fig. 14), thus obtaining E(Kpub, Ksub). In step S110, the CPU 21 adds E(Kpub, Ksub) obtained in step S109 to the usage right selected in step S105.

Fig. 24 is an illustration of an example of the usage right generated by the above-described processes.

The version is information describing the version of the usage right by separating a major version and a minor version by a dot. The profile, which is described using a decimal integer, is information for defining the limitation of a method of describing the usage right. The usage right ID, which is described using a hexadecimal constant, is identification information for identifying the usage right. The creation date indicates the date on which the usage right is created. The expiration date indicates the expiration date of the usage right. The expiration date 23:59:59 of the year 9999 indicates that there is no limit on the expiration date. The usage rules include information indicating the expiration date for using the content on the basis of the usage right; the expiration date for playing the content on the basis of the usage right; the maximum playback count; the number of times the content can be copied on the basis of the usage right (the number of permitted copies); the maximum number of times the content can be checked out; whether the content can be recorded on a CD-R on the basis of the usage right; the number of times the content can be copied to a PD (Portable Device); whether the usage right can be transferred; and whether it is obliged to keep the usage log. The digital signatures of the usage rules are associated with the usage rules.

The constants are referred to by the usage rules or the usage status. The leaf ID is identification information for identifying the client. The digital signature is associated with the overall usage right. The certificate includes the public key of the license server 4.

The storage unit 28 of the client 1 stores, in addition to the usage rules of the usage right, the usage status (content rules) serving as information indicating the status of the content and the usage right. The usage status includes information indicating the number of times the content is played on the basis of the associated usage right; the number of times the content is copied; the number of times the content is checked out; the date on which the content is played for the first time; the number of times the content is recorded on a CD-R; and record information concerning the content or the usage right. Whether the rules of playing the content are satisfied is determined on the basis of the usage rules included in the usage right and the usage status stored, along with the usage right, in the storage unit 28. For example, when the number of times the content is played, which is stored in the usage status, is less than the maximum number of times the content can be played, which is included in the usage rule, it is determined that the playback rule is satisfied.

The usage right includes E(Kpub, Ksub) generated by the processing in step S109.

Referring back to the description of Fig. 23, in step S111, the CPU 21 controls the communication unit 29 to transmit the usage right, which has been generated as described above, to the client 1.

In step S112, the CPU 21 of the license server 4 stores the information included in the usage right, which has been transmitted in step S111, in the storage unit 28 in association with the user ID and password loaded by the processing in step S102. In step S113, the CPU 21 performs the billing processing.

Specifically, the CPU 21 requests, using the communication unit 29, the billing server 5 to bill the user associated with the user ID and password. In response to the billing request, the billing server 5 bills the user.

As described above, when the user who has been billed for the fee does not pay the fee, from this point onward, the user is not allowed to receive a usage right even when the user requests the grant of the usage right.

Specifically, in this case, the billing server 5 transmits the credit result prohibiting the grant of the usage right. The process proceeds from step S104 to step S114. The CPU 21 performs the error processing, such as outputting a message indicating that the grant of the usage right is prohibited to the client 1.

With reference to the flowchart of Fig. 25, the content playing process by the client 1, which is performed in step S78 of Fig. 21, will be described in detail.

In step S121, the CPU 21 of the client 1 decrypts key information included in the EKB (Fig. 17) of the content using the DNK provided in advance from the service data to obtain the root key Kroot.

In step S122, the CPU 21 decrypts E(Kroot, Kekb) using the root key Kroot obtained in step S121 to obtain the EKB key Kekb.

In step S123, the CPU 21 decrypts E(Kpub, Ksub), which is included in the usage right, using the private key Kpri associated with the public key Kpub of the license server 4 (private key obtained in advance from the service data) to obtain the sub key Ksub.

In step S124, the CPU 21 generates the content key Kc on the basis of the EKB key Kekb obtained in step S122 and the sub key Ksub obtained in step S123. Specifically, the CPU 21 computes the exclusive OR of the EKB key Kekb and the sub key Ksub and obtains the exclusive OR as the content key Kc.

In step S125, the CPU 21 decrypts E(Kc, Cont) using the content key Kc obtained in step S124 to obtain the content. Subsequently, under the control of the CPU 21, the obtained content is played and output by the output unit 27 in step S79 of Fig. 21.

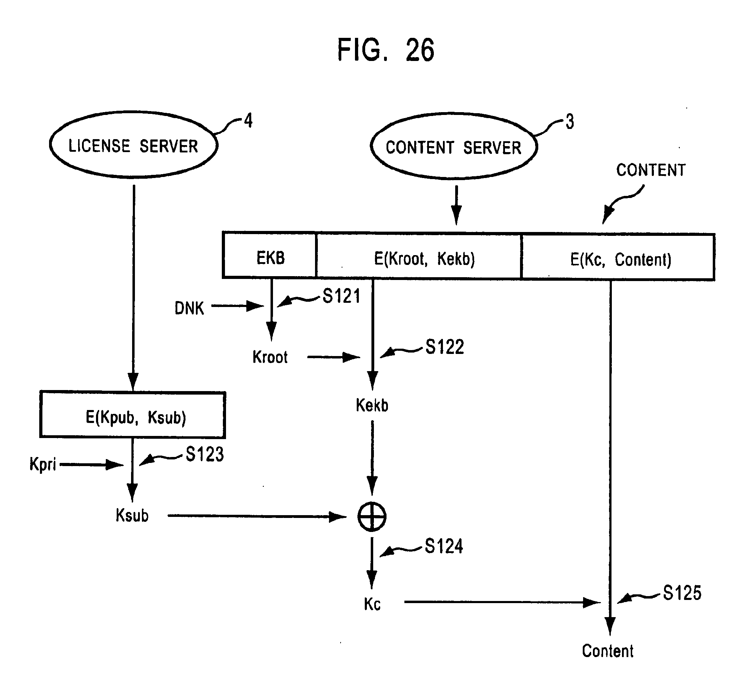

Fig. 26 is a schematic diagram showing the content playing process performed by the client 1 in the above described manner. Referring to Fig. 26, S121 to S125 correspond to the processing in steps S121 to S125 of Fig. 25, respectively. Referring to Fig. 26, only the main information included in content is shown.

As shown in Fig. 26, the client 1 processes the EKB arranged in the content obtained from the content server 3 using the DNK given in advance to the client 1, thus obtaining the root key Kroot (step S121).

Also, E(Kroot, Kekb) located on the immediate right of the EKB is decrypted by the root key Kroot, thus obtaining the EKB key Kekb (step S122).

In contrast, E(Kpub, Ksub) included in the usage right, which is provided by the license server 4, is decrypted by the private key Kpri given in advance from the service data to the client, thus obtaining the sub key Ksub (step S123).

The exclusive OR of the sub key Ksub and the EKB key Kekb is computed, and the exclusive OR serving as the content key Kc is generated (step S124). Using the generated content key Kc, E(Kc, Cont) located on the right end of the content is decrypted, thus obtaining the content (S125).

As described above, first, a combination of offline authentication in which the root key Kroot is obtained from the EKB on the basis of the DNK and offline authentication in which the sub key Ksub encrypted by the public key Ksub is decrypted using the private key Kpri makes it possible to prevent unauthorized use of the content since, even when the information included in the EKB is read without authorization, the private key Kpri is required to use the content.

Second, even when the user of the client 1 does not access the license server 4 for a predetermined period of time, the client 1 committing an unauthorized act is disabled (prevented from obtaining the root key Kroot) by changing the EKB information and distributing the changed EKB information to the other clients belonging to a service.

Third, in the case where content is music content, demo content provided for trial is encrypted only by the DNK, whereas content for purchase is encrypted by the content key Kc produced by the EKB key Kekeb and the sub key Ksub. When a user wants to use the demo content, the user downloads only the content. In contrast, when a user wants to actually purchase the content for purchase, the user obtains a usage right. Accordingly, the service becomes more diverse.

In the above described embodiment, to specify a necessary usage right for using content, attributes of the content and content rules of the usage right are used. However, the necessary information is not limited to these pieces of information. For example, the content may include the usage right ID of the necessary usage right for using the content. In this case, the necessary usage right for using the content is uniquely determined by specifying the content. It thus becomes unnecessary to determine the matching between the content and the usage right.

Industrial Applicability

According to the present invention, content is provided.

According to the present invention, unauthorized use of content is prevented.

**Claims**

1.  An information processing apparatus that decrypts content data by third key information (Kc) generated on the basis of first key information (EKB; E(Kroot, Kekb)) and second key information (Ksub) and uses the content data, comprising:

    content obtaining means for obtaining content including the first key information and the content data encrypted by the third key information;
    usage right obtaining means for obtaining a usage right (E(Kpub, Ksub)) serving as information concerning use of the content, the usage right including the second key information;
    key information generating means for generating the third key information on the basis of the first key information included in the content obtained by the content obtaining means and the second key information extracted from the usage right obtained by the usage right obtaining means;
    decryption means for decrypting the content data by the third key information generated by the key information generating means; **characterized in that** it further comprises:
    request means for making a request for private key information (Kpri) and a device node key (DNK) associated with a node in a tree structure associated with the information processing apparatus, the device node key being on a system for managing the usage right, to a usage right management apparatus that manages the providing of the usage right; and

obtaining means for obtaining the private key information and the device node key, which are provided by the usage right management apparatus, in response to the request from the request means,

wherein the key information generating means extracts the first key information from the content on the basis of the device node key obtained by the obtaining means, by using the device node key to extract a root key (Kroot) of the tree structure and extracting the first key information using the root key, and the key information generating means extracts the second key information from the usage right on the basis of the private key information obtained by the obtaining means.

2. The information processing apparatus according to claim 1, wherein the key information generating means regards the result of the exclusive OR of the first key information and the second key information as the third key information.

3. An information processing method for an information processing apparatus that decrypts content data by third key information generated on the basis of first key information and second key information and uses the content data, the information processing method comprising:

a content obtaining step of obtaining content including the first key information and the content data encrypted by the third key information;

a usage right obtaining step of obtaining a usage right serving as information concerning use of the content, the usage right including the second key information;

a key information generating step of generating the third key information on the basis of the first key information included in the content obtained in the content obtaining step and the second key information extracted from the usage right obtained in the usage right obtaining step; **characterized in that** it further comprises:

a requesting step of requesting, from a usage right management apparatus that manages the providing of the usage right, private key information and a device node key associated with a node in a tree structure associated with the information processing apparatus, the device node key being on a system for managing the usage right; and

an obtaining step of obtaining the private key information and the device node key, which are provided by the usage right management apparatus, in response to the requesting step, wherein in the key information generating step the first key information is extracted from the content on the basis of the device node key obtained in the obtaining step, by using the device node key to extract a root key of the tree structure and extracting the first key information using the root key, and

in the key information generating step the second key information is extracted from the usage right on the basis of the private key information obtained in the obtaining step; and

a decryption step of decrypting the content data by the third key information generated in the key information generating step.

4. A recording medium having a computer-readable program stored thereon for an information processing apparatus that decrypts content data by third key information generated on the basis of first key information and second key information and uses the content data, the program comprising:

a content obtaining control step of controlling the obtaining of content including the first key information and the content data encrypted by the third key information;

a usage right obtaining control step of controlling the obtaining of a usage right serving as information concerning use of the content, the usage right including the second key information;

a key information generation control step of controlling generation of the third key information on the basis of the first key information included in the content obtained in the content obtaining control step and the second key information extracted from the usage right obtained in the usage right obtaining control step; **characterized in that** it further comprises:

a requesting control step of controlling requesting; from a usage right management apparatus that manages the providing of the usage right, private key information and a device node key associated with a node in a tree structure associated with the information processing apparatus, the device node key being on a system for managing the usage right; and

an obtaining control step of controlling obtaining the private key information and the device node key, which are provided by the usage right management apparatus, in response to the requesting control step,

wherein in the key information generation control step the first key information is extracted from the content on the basis of the device node key obtained in the obtaining control step, by using the device node key to extract a root key of the tree structure and extracting the first key information using the root key, and

in the key information generation control step the second key information is extracted from the usage right on the basis of the private key information obtained in the obtaining control step; and

a decryption control step of controlling decryption of the content data by the third key information generated in the key information generation control step.

5. A program for causing a computer that controls an information processing apparatus that decrypts content data by third key information generated on the basis of first key information and second key information and uses the content data to perform a process comprising:

a content obtaining control step of controlling the obtaining of content including the first key information and the content data encrypted by the third key information;

a usage right obtaining control step of controlling the obtaining of a usage right serving as information concerning use of the content, the usage right including the second key information;

a key information generation control step of controlling generation of the third key information on the basis of the first key information included in the content obtained in the content obtaining control step and the second key information extracted from the usage right obtained in the usage right obtaining control step; **characterized in that** it further comprises:

a requesting control step of controlling requesting, from a usage right management apparatus that manages the providing of the usage right, private key information and a device node key associated with a node in a tree structure associated with the information processing apparatus, the device node key being on a system for managing the usage right; and

an obtaining control step of controlling obtaining the private key information and the device node key, which are provided by the usage right management apparatus, in response to the requesting control step,

wherein in the key information generation control step the first key information is extracted from the content on the basis of the device node key obtained in the obtaining control step, by using the device node key to extract a root key of the tree structure and extracting the first key information using the root key, and

in the key information generation control step the second key information is extracted from the usage right on the basis of the private key information obtained in the obtaining control step; and

a decryption control step of controlling decryption of the content data by the third key information generated in the key information generation control step.

6. An information providing apparatus that provides content including content data and information accompanying the content data to an information processing apparatus that decrypts the content data by third key information generated on the basis of first key information and second key information and uses the content data, the information providing apparatus comprising:

key information generating means for generating the first key information and the second key information and for generating the third key information obtainable by the information processing apparatus on the basis of the first key information and the second key information; encryption means for encrypting the content data by the third key information generated by the key information generating means; **characterized in that** it further comprises: content generating means for generating the content including the first key information generated by the key information generating means and encrypted using a device node key provided to the information processing apparatus, the device node key being associated with a node in a tree structure associated with the information processing apparatus, the first key information being encrypted by using the device node key to encrypt a root key of the tree structure and encrypting the first key information using the root key; and

providing means for providing the second key information to a usage right management apparatus that manages the providing of a usage right to the information processing apparatus, the usage right serving as information concerning use of the content.

7. An information providing method for an information providing apparatus that provides content including content data and information accompanying the content data to an information processing apparatus that decrypts the content data by third key information generated on the basis of first key information and second key information and uses the content data, the information providing method comprising:

a key information generating step of generating the first key information and the second key information and generating the third key information obtainable by the information processing apparatus on the basis of the first key information and the second key information; an encryption step of encrypting the content data by the third key information generated in the key information generating step; **characterized in that** it further comprises:

a content generating step of generating the content including the first key information generated in the key information generating step and encrypted using a device node key provided to the information processing apparatus, the device node key being associated with a node in a tree structure associated with the information processing apparatus, the first key information being encrypted by using the device node key to encrypt a root key of the tree structure and encrypting the first key information using the root key; and

a providing step of providing the second key information to a usage right management apparatus that manages the providing of a usage right to the information processing apparatus, the usage right serving as information concerning use of the content.

8. A recording medium having a computer-readable program stored thereon for an information providing apparatus that provides content including content data and information accompanying the content data to an information processing apparatus that decrypts the content data by third key information generated on the basis of first key information and second key information and uses the content data, the program comprising:

a key information generation control step of controlling generation of the first key information and the second key information and generation of the third key information obtainable by the information processing apparatus on the basis of the first key information and the second key information;

an encryption control step of controlling encryption of the content data by the third key information generated in the key information generation control step; **characterized in that** it further comprises:

a content generation control step of controlling generation of the content including the first key information generated in the key information generation control step and encrypted using a device node key provided to the information processing apparatus, the device node key being associated with a node in a tree structure associated with the information processing apparatus, the first key information being encrypted by using the device node key to encrypt a root key of the tree structure and encrypting the first key information using the root key; and

a providing control step of controlling the providing of the second key information to a usage right management apparatus that manages the providing of a usage right to the information processing apparatus, the usage right serving as information concerning use of the content.

9. A program for causing a computer that controls an information providing apparatus that provides content including content data and information accompanying the content data to an information processing apparatus that decrypts the content data by third key information generated on the basis of first key information and second key information and uses the content data to perform a process comprising:

a key information generation control step of controlling generation of the first key information and the second key information and generation of the third key information obtainable by the information processing apparatus on the basis of the first key information and the second key information;

an encryption control step of controlling encryption of the content data by the third key information generated in the key information generation control step; **characterized in that** it further comprises:

a content generation control step of controlling generation of the content including the first key information generated in the key information generation control step and encrypted using a device node key provided to the information processing apparatus, the device node key being associated with a node in a tree structure associated with the information processing apparatus, the first key information being encrypted by using the device node key to encrypt a root key of the tree structure and encrypting the first key information using the root key; and

a providing control step of controlling the providing of the second key information to a usage right management apparatus that manages the providing of a usage right to the information processing apparatus, the usage right serving as information concerning use of the content.

10. A usage right management apparatus that manages the providing of a usage right serving as information concerning use of content including content data and information accompanying the content data to an information processing apparatus that decrypts the content data by third key information generated on the basis of first key information and second key information and uses the content data, the usage right management apparatus comprising:

obtaining means for obtaining the second key information from an information providing apparatus that provides the content to the information processing apparatus;

generation means for generating the usage right associated with the content for use by the information processing apparatus in response to a request from the information processing apparatus;

usage right providing means for providing the usage right generated by the generation means to the information processing apparatus; and **characterized in that** it further comprises:

providing means for providing a device node key associated with a node in a tree structure associated with the information processing apparatus, the device node key being on a system for managing the private key information and the usage right, to the information processing apparatus in response to a request from the information processing apparatus,

wherein the generation means generates the usage right including information produced by encrypting the second key information obtained by the obtaining means using public key information associated with private key information provided to the information processing apparatus.

11. A usage right management method for a usage right management apparatus that manages the providing of a usage right serving as information concerning use of content including content data and information accompanying the content data to an information processing apparatus that decrypts the content data by third key information generated on the basis of first key information and second key information and uses the content data, the usage right management method comprising:

an obtaining step of obtaining the second key information from an information providing apparatus that provides the content to the information processing apparatus;

a generation step of generating the usage right associated with the content for use by the information processing apparatus in response to a request from the information processing apparatus;

a usage right providing step of providing the usage right generated in the generation step to the information processing apparatus; and **characterized in that** it further comprises:

a providing step of providing a device node key associated with a node in a tree structure associated with the information processing apparatus, the device node key being on a system for managing the private key information and the usage right, to the information processing apparatus in response to a request from the information processing apparatus,

wherein, in the generation step, the usage right is generated, the usage right including information produced by encrypting the second key information using public key information associated with private key information provided to the information processing apparatus.

12. A recording medium having a computer-readable program stored thereon for a usage right management apparatus that manages the providing of a usage right serving as information concerning use of content including content data and information accompanying the content data to an information processing apparatus that decrypts the content data by third key information generated on the basis of first key information and second key information and uses the content data, the program comprising:

an obtaining control step of controlling the obtaining of the second key information from an information providing apparatus that provides the content to the information processing apparatus;

a generation control step of controlling generation of the usage right associated with the content for use by the information processing apparatus in response to a request from the information processing apparatus;

a usage right providing control step of controlling the providing of the usage right generated in the generation control step to the information processing apparatus; and **characterized in that** it further comprises:

a providing control step of controlling providing a device node key associated with a node in a tree structure associated with the information processing apparatus, the device node key being on a system for managing the private key information and the usage right, to the information processing apparatus in response to a request from the information processing apparatus,

wherein, in the generation control step, the usage right is generated, the usage right including information produced by encrypting the second key information using public key information associated with private key information provided to the information processing apparatus.

13. A program for causing a computer that controls a usage right management apparatus that manages the providing of a usage right serving as information concerning use of content including content data and information accompanying the content data to an information processing apparatus that decrypts the content data by third key information generated on the basis of first key information and second key information and uses the content data to perform a process comprising:

an obtaining control step of controlling the obtaining of the second key information from an information providing apparatus that provides the content to the information processing apparatus;

a generation control step of controlling generation of the usage right associated with the content for use by the information processing apparatus in response to a request from the information processing apparatus;

a usage right providing control step of controlling the providing of the usage right generated in the generation control step to the information processing apparatus; and **characterized in that** it further comprises:

a providing control step of controlling providing a device node key associated with a node in a tree structure associated with the information processing apparatus, the device node key being on a system for managing the private key information and the usage right, to the information processing apparatus in response to a request from the information processing apparatus,

wherein, in the generation control step, the usage right is generated, the usage right including information produced by encrypting the second key information using public key information associated with private key information provided to the information processing apparatus.

**Patentansprüche**

1. Informationsverarbeitungseinrichtung, welche Inhaltsdaten mittels dritten Schlüsselinformationen (Kc) entschlüsselt, die basierend auf ersten Schlüsselinformationen (EKB; E(Kroot, Kekb)) und zweiten Schlüsselinformationen (Ksub) erzeugt werden, und welche die Inhaltsdaten verwendet, wobei die Informationsverarbeitungseinrichtung aufweist:

Inhalterlangungsmittel zum Erlangen von Inhalt einschließlich der ersten Schlüsselinformationen und der mittels der dritten Schlüsselinformationen verschlüsselten Inhaltsdaten;
Nutzungsrecht-Erlangungsmittel zum Erlangen eines Nutzungsrechts (E(Kpub, Ksub)), das als Information bezüglich der Verwendung des Inhalts dient, wobei das Nutzungsrecht die zweiten Schlüsselinformationen enthält;
Schlüsselinformations-Erzeugungsmittel zum Erzeugen der dritten Schlüsselinformationen basierend auf den ersten Schlüsselinformationen, die im vom Inhalterlangungsmittel erlangten Inhalt enthalten sind, und den zweiten Schlüsselinformationen, die aus dem vom Nutzungsrecht-Erlangungsmittel erlangten Nutzungsrecht extrahiert worden sind;
Entschlüsselungsmittel zum Entschlüsseln der Inhaltsdaten mittels der vom Schlüsselinformations-Erzeugungsmittel erzeugten dritten Schlüsselinformationen; **dadurch gekennzeichnet, dass** die Informationsverarbeitungseinrichtung weiterhin aufweist:
Anforderungsmittel zum Stellen einer Anforderung an eine Nutzungsrecht-Verwaltungseinrichtung, welche die Bereitstellung des Nutzungsrechts verwaltet, für private Schlüsselinformationen (Kpri) und für einen Geräteknotenschlüssel (DNK), der mit einem Knoten in einer mit der Informationsverarbeitungseinrichtung verknüpften Baumstruktur verknüpft ist, wobei der Geräteknotenschlüssel in einem System für die Verwaltung des Nutzungsrechts vorhanden ist; und
Erlangungsmittel zum Erlangen der privaten Schlüsselinformationen und des Geräteknotenschlüssels, die jeweils von der Nutzungsrecht-Verwaltungseinrichtung aufgrund der Anforderung durch das Anforderungsmittel bereitgestellt werden,
wobei das Schlüsselinformations-Erzeugungsmittel die ersten Schlüsselinformationen basierend auf dem vom Erlangungsmittel erlangten Geräteknotenschlüssel aus dem Inhalt extrahiert, indem es den Geräteknotenschlüssel zum Extrahieren eines Root-Schlüssels (Kroot) der Baumstruktur verwendet und die ersten Schlüsselinformationen mittels des Root-Schlüssels extrahiert, und das Schlüsselinformations-Erzeugungsmittel die zweiten Schlüsselinformationen basierend auf den vom Erlangungsmittel erlangten privaten Schlüsselinformationen aus dem Nutzungsrecht extrahiert.

2. Informationsverarbeitungseinrichtung nach Anspruch 1, wobei das Schlüsselinformations-Erzeugungsmittel das Ergebnis des Exklusiven ODER der ersten Schlüsselinformationen und der zweiten Schlüsselinformationen als die dritten Schlüsselinformationen behandelt.

3. Informationsverarbeitungsverfahren für eine Informationsverarbeitungseinrichtung, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei das Informationsverarbeitungsverfahren aufweist:

einen InhaltErlangungsschritt des Erlangens von Inhalt einschließlich der ersten Schlüsselinformationen und der mittels der dritten Schlüsselinformationen verschlüsselten Inhaltsdaten;
einen Nutzungsrecht-Erlangungsschritt des Erlangens eines Nutzungsrechts, das als Information bezüglich der Verwendung des Inhalts dient, wobei das Nutzungsrecht die zweiten Schlüsselinformationen enthält;
einen Schlüsselinformations-Erzeugungsschritt des Erzeugens der dritten Schlüsselinformationen basierend auf den ersten Schlüsselinformationen, die in dem im InhaltErlangungsschritt erlangten Inhalt enthalten sind, und der zweiten Schlüsselinformationen, die aus dem im Nutzungsrecht-Erlangungsschritt erlangten Nutzungsrecht extrahiert werden; **dadurch gekennzeichnet, dass** das Informationsverarbeitungsverfahren weiterhin aufweist:
einen Anforderungsschritt des Anforderns bei einer Nutzungsrecht-Verwaltungseinrichtung, welche die Bereitstellung des Nutzungsrechts verwaltet, von privaten Schlüsselinformationen und eines Geräteknotenschlüssel, der mit einem Knoten in einer mit der Informationsverarbeitungseinrichtung verknüpften Baumstruktur verknüpft ist, wobei der Geräteknotenschlüssel in einem System für die Verwaltung des Nutzungsrechts vorhanden ist; und
einen Erlangungsschritt des Erlangens der privaten Schlüsselinformationen und des Geräteknotenschlüssels, die jeweils von der Nutzungsrecht-Verwaltungseinrichtung aufgrund des Anforderungsschritts bereitgestellt werden,
wobei im Schlüsselinformations-Erzeugungsschritt die ersten Schlüsselinformationen basierend auf dem im Erlangungsschritt erlangten Geräteknotenschlüssel aus dem Inhalt extrahiert werden, indem der Geräteknotenschlüssel zum Extrahieren eines Root-Schlüssels der Baumstruktur verwendet wird und die ersten Schlüsselinformationen mittels des Root-Schlüssels extrahiert werden, und
im Schlüsselinformations-Erzeugungsschritt die zweiten Schlüsselinformationen basierend auf den im Erlangungsschritt erlangten privaten Schlüsselinformationen aus dem Nutzungsrecht extrahiert werden; und
einen Entschlüsselungsschritt des Entschlüsselns der Inhaltsdaten mittels der im Schlüsselinformations-Erzeugungsschritt erzeugten dritten Schlüsselinformationen.

4. Aufzeichnungsmedium mit einem darauf gespeicherten computerlesbaren Programm für eine Informationsverarbeitungseinrichtung, die Inhaltsdaten mittels der dritten Schlüsselinformationen entschlüsselt, die basierend auf den ersten Schlüsselinformationen und zweiten Schlüsselinformationen erzeugt werden, sowie die Inhaltsdaten verwendet, wobei das Programm aufweist:

einen Inhalterlangungs-Steuerschritt des Steuerns des Abrufs von Inhalt, der die ersten Schlüsselinformationen enthält, sowie der mittels der dritten Schlüsselinformationen verschlüsselten Inhaltsdaten;
einen Nutzungsrechterlangungs-Steuerschritt des Steuerns des Abrufs eines Nutzungsrechts, das als Information bezüglich der Verwendung des Inhalts dient, wobei das Nutzungsrecht die zweiten Schlüsselinformationen enthält;
einen Schlüsselinformationserzeugungs-Steuerschritt des Steuerns der Erzeugung der dritten Schlüsselinformationen basierend auf den ersten Schlüsselinformationen, die in dem im Inhalterlangungs-Steuerschritt erlangten Inhalt enthalten sind, und der zweiten Schlüsselinformationen, die aus dem Nutzungsrecht extrahiert werden, das im Nutzungsrechterlangungs-Steuerschritt abgerufen worden ist; **dadurch gekennzeichnet, dass** das Programm weiterhin aufweist:
einen Anforderungs-Steuerschritt des Steuerns der Anforderung bei einer Nutzungsrecht-Verwaltungseinrichtung, welche die Bereitstellung des Nutzungsrechts verwaltet, von privaten Schlüsselinformationen und eines Geräteknotenschlüssel, der mit einem Knoten in einer mit der Informationsverarbeitungseinrichtung verknüpften Baumstruktur verknüpft ist, wobei der Geräteknotenschlüssel in einem System für die Verwaltung des Nutzungsrechts vorhanden ist; und
einen Abruf-Steuerschritt des Steuerns des Abrufs der privaten Schlüsselinformationen und des Geräteknotenschlüssels, die jeweils von der Nutzungsrecht-Verwaltungseinrichtung als Antwort auf den Anforderungs-Steuerschritt bereitgestellt werden,
wobei im Schlüsselinformationserzeugungs-Steuerschritt die ersten Schlüsselinformationen basierend auf dem im Abruf-Steuerschritt erlangten Geräteknotenschlüssel aus dem Inhalt extrahiert werden, indem der Geräteknotenschlüssel zum Extrahieren eines Root-Schlüssels der Baumstruktur verwendet wird und die ersten Schlüsselinformationen mittels des Root-Schlüssels extrahiert werden, und
im Schlüsselinformationserzeugungs-Steuerschritt die zweiten Schlüsselinformationen basierend auf den im Abruf-Steuerschritt erlangten privaten Schlüsselinformationen aus dem Nutzungsrecht extrahiert werden; und
einen Entschlüsselungs-Steuerschritt des Steuerns der Entschlüsselung der Inhaltsdaten mittels der im Schlüsselinformationserzeugungs-Steuerschritt erzeugten dritten Schlüsselinformationen.

5. Programm, das einen Computer, der eine Informationsverarbeitungseinrichtung steuert, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, zur Ausführung eines Prozesses veranlasst, der umfasst:

   einen Inhalterlangungs-Steuerschritt des Steuems des Abrufs von Inhalt einschließlich der ersten Schlüsselinformationen und der mittels der dritten Schlüsselinformationen verschlüsselten Inhaltsdaten;
   einen Nutzungsrechterlangungs-Steuerschritt des Steuerns des Abrufs eines Nutzungsrechts, das als Information bezüglich der Verwendung des Inhalts dient, wobei das Nutzungsrecht die zweiten Schlüsselinformationen enthält;
   einen Schlüsselinformationserzeugungs-Steuerschritt des Steuems der Erzeugung der dritten Schlüsselinformationen basierend auf den ersten Schlüsselinformationen, die in dem im Inhalterlangungs-Steuerschritt erlangten Inhalt enthalten sind, und der zweiten Schlüsselinformationen, die aus dem im Nutzungsrechterlangungs-Steuerschritt erlangten Nutzungsrecht extrahiert werden; **dadurch gekennzeichnet, dass** der Prozess weiterhin aufweist:
   einen Anforderungs-Steuerschritt des Steuems der Anforderung bei einer Nutzungsrecht-Verwaltungseinrichtung, welche die Bereitstellung des Nutzungsrechts verwaltet, von privaten Schlüsselinformationen und eines Geräteknotenschlüssel, der mit einem Knoten in einer mit der Informationsverarbeitungseinrichtung verknüpften Baumstruktur verknüpft ist, wobei der Geräteknotenschlüssel in einem System für die Verwaltung des Nutzungsrechts vorhanden ist; und
   einen Abruf-Steuerschritt des Steuerns des Abrufs der privaten Schlüsselinformationen und des Geräteknotenschlüssels, die jeweils von der Nutzungsrecht-Verwaltungseinrichtung als Antwort auf den Anforderungs-Steuerschritt bereitgestellt werden,
   wobei im Schlüsselinformationserzeugungs-Steuerschritt die ersten Schlüsselinformationen basierend auf dem im Abruf-Steuerschritt erlangten Geräteknotenschlüssel aus dem Inhalt extrahiert werden, indem der Geräteknotenschlüssel zum Extrahieren eines Root-Schlüssels der Baumstruktur verwendet wird und die ersten Schlüsselinformationen mittels des Root-Schlüssels extrahiert werden, und
   im Schlüsselinformationserzeugungs-Steuerschritt die zweiten Schlüsselinformationen basierend auf den im Abruf-Steuerschritt erlangten privaten Schlüsselinformationen aus dem Nutzungsrecht extrahiert werden; und
einen Entschlüsselungs-Steuerschritt des Steuems der Entschlüsselung der Inhaltsdaten mittels der im Schlüsselinformationserzeugungs-Steuerschritt erzeugten dritten Schlüsselinformationen.

6. Informationsbereitstellungseinrichtung, die Inhalt einschließlich Inhaltsdaten und Inhaltsdaten begleitende Informationen für eine Informationsverarbeitungseinrichtung bereitstellt, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei die Informationsbereitstellungseinrichtung aufweist:

   Schlüsselinformations-Erzeugungsmittel zum Erzeugen der ersten Schlüsselinformationen und der zweiten Schlüsselinformationen und zum Erzeugen basierend auf den ersten Schlüsselinformationen und zweiten Schlüsselinformationen der für die Informationsverarbeitungseinrichtung abrufbaren dritten Schlüsselinformationen;
   Verschlüsselungsmittel zum Verschlüsseln der Inhaltsdaten mittels der vom Schlüsselinformations-Erzeugungsmittel erzeugten dritten Schlüsselinformationen; **dadurch gekennzeichnet, dass** die Informationsbereitstellungseinrichtung weiterhin aufweist:
   Inhaltserzeugungsmittel zum Erzeugen des Inhalts einschließlich der ersten Schlüsselinformationen, die durch das Schlüsselinformations-Erzeugungsmittel erzeugt und mittels eines für die Informationsverarbeitungseinrichtung bereitgestellten Geräteknotenschlüssels verschlüsselt werden, wobei der Geräteknotenschlüssel mit einem Knoten in einer mit der Informationsverarbeitungseinrichtung verknüpften Baumstruktur verknüpft ist, und die ersten Schlüsselinformationen verschlüsselt werden, indem der Geräteknotenschlüssel zur Verschlüsselung eines Root-Schlüssels der Baumstruktur verwendet wird und die ersten Schlüsselinformationen mittels des Root-Schlüssels verschlüsselt werden; und
   Bereitstellungsmittel zum Bereitstellen der zweiten Schlüsselinformationen für eine Nutzungsrecht-Verwaltungseinrichtung, welche die Bereitstellung eines Nutzungsrechts für die Informationsverarbeitungseinrichtung verwaltet, wobei das Nutzungsrecht als Information bezüglich der Verwendung des Inhalts dient.

**7.** Informationsbereitstellungsverfahren für eine Informationsbereitstellungseinrichtung, die Inhalt einschließlich Inhaltsdaten und Inhaltsdaten begleitende Informationen für eine Informationsverarbeitungseinrichtung bereitstellt, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei das Informationsbereitstellungsverfahren aufweist:

einen Schlüsselinformations-Erzeugungsschritt des Erzeugens der ersten Schlüsselinformationen und der zweiten Schlüsselinformationen und des Erzeugens basierend auf den ersten Schlüsselinformationen und zweiten Schlüsselinformationen der für die Informationsverarbeitungseinrichtung abrufbaren dritten Schlüsselinformationen;
einen Verschlüsselungsschritt des Verschlüsselns der Inhaltsdaten mittels der vom Schlüsselinformations-Erzeugungsmittel erzeugten dritten Schlüsselinformationen; **dadurch gekennzeichnet, dass** das Informationsbereitstellungsverfahren weiterhin aufweist:
einen Inhaltserzeugungsschritt des Erzeugens des Inhalts einschließlich der ersten Schlüsselinformationen, die im Schlüsselinformations-Erzeugungsschritt erzeugt und mittels eines für die Informationsverarbeitungseinrichtung bereitgestellten Geräteknotenschlüssels verschlüsselt werden, wobei der Geräteknotenschlüssel mit einem Knoten in einer mit der Informationsverarbeitungseinrichtung verknüpften Baumstruktur verknüpft ist, und die ersten Schlüsselinformationen verschlüsselt werden, indem der Geräteknotenschlüssel zur Verschlüsselung eines Root-Schlüssels der Baumstruktur verwendet wird und die ersten Schlüsselinformationen mittels des Root-Schlüssels verschlüsselt werden; und
einen Bereitstellungsschritt des Bereitstellens der zweiten Schlüsselinformationen für eine Nutzungsrecht-Verwaltungseinrichtung, welche die Bereitstellung eines Nutzungsrechts für die Informationsverarbeitungseinrichtung verwaltet, wobei das Nutzungsrecht als Information bezüglich der Verwendung des Inhalts dient.

**8.** Aufzeichnungsmedium mit einem darauf gespeicherten computerlesbaren Programm für eine Informationsbereitstellungseinrichtung, die Inhalt einschließlich Inhaltsdaten und Inhaltsdaten begleitende Informationen für eine Informationsverarbeitungseinrichtung bereitstellt, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei das Programm aufweist:

einen Schlüsselinformationserzeugungs-Steuerschritt des Steuerns der Erzeugung der ersten Schlüsselinformationen und der zweiten Schlüsselinformationen und der Erzeugung von für die Informationsverarbeitungseinrichtung abrufbaren dritten Schlüsselinformationen basierend auf den ersten Schlüsselinformationen und zweiten Schlüsselinformationen;
einen Verschlüsselungs-Steuerschritt des Steuerns der Verschlüsselung der Inhaltsdaten mittels der im Schlüsselinformationserzeugungs-Steuerschritt erzeugten dritten Schlüsselinformationen; **dadurch gekennzeichnet, dass** das Programm weiterhin aufweist:
einen Inhaltserzeugungs-Steuerschritt des Steuerns der Erzeugung des Inhalts einschließlich der ersten Schlüsselinformationen, die im Schlüsselinformationserzeugungs-Steuerschritt erzeugt und mittels eines für die Informationsverarbeitungseinrichtung bereitgestellten Geräteknotenschlüssels verschlüsselt werden, wobei der Geräteknotenschlüssel mit einem Knoten in einer Baumstruktur verknüpft ist, welche mit der Informationsverarbeitungseinrichtung verknüpft ist, und die ersten Schlüsselinformationen verschlüsselt werden, indem der Geräteknotenschlüssel zur Verschlüsselung eines Root-Schlüssels der Baumstruktur verwendet wird und die ersten Schlüsselinformationen mittels des Root-Schlüssels verschlüsselt werden; und
einen Bereitstellungs-Steuerschritt des Steuerns der Bereitstellung der zweiten Schlüsselinformationen für eine Nutzungsrecht-Verwaltungseinrichtung, welche die Bereitstellung eines Nutzungsrechts für die Informationsverarbeitungseinrichtung verwaltet, wobei das Nutzungsrecht als Information bezüglich der Verwendung des Inhalts dient.

**9.** Programm, das einen Computer, der eine Informationsbereitstellungseinrichtung steuert, die Inhalt einschließlich Inhaltsdaten und Inhaltsdaten begleitende Informationen für eine Informationsverarbeitungseinrichtung bereitstellt, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, zur Ausführung eines Prozesses veranlasst, der umfasst:

einen Schlüsselinformationserzeugungs-Steuerschritt des Steuerns der Erzeugung der ersten Schlüsselinformationen und der zweiten Schlüsselinformationen und der Erzeugung basierend der ersten Schlüsselinformationen und zweiten Schlüsselinformationen der für die Informationsverarbeitungseinrichtung abrufbaren dritten Schlüsselinformationen;

einen Verschlüsselungs-Steuerschritt des Steuerns der Verschlüsselung der Inhaltsdaten mittels der im Schlüsselinformationserzeugungs-Steuerschritt erzeugten dritten Schlüsselinformationen; **dadurch gekennzeichnet, dass** der Prozess weiterhin aufweist:

einen Inhaltserzeugungs-Steuerschritt der Erzeugung des Inhalts einschließlich der ersten Schlüsselinformationen, die im Schlüsselinformations-Erzeugungsschritt erzeugt und mittels eines für die Informationsverarbeitungseinrichtung bereitgestellten Geräteknotenschlüssels verschlüsselt werden, wobei der Geräteknotenschlüssel mit einem Knoten in einer mit der Informationsverarbeitungseinrichtung verknüpften Baumstruktur verknüpft ist, und die ersten Schlüsselinformationen verschlüsselt werden, indem der Geräteknotenschlüssel zur Verschlüsselung eines Root-Schlüssels der Baumstruktur verwendet wird und die ersten Schlüsselinformationen mittels des Root-Schlüssels verschlüsselt werden; und

einen Bereitstellungs-Steuerschritt der Bereitstellung der zweiten Schlüsselinformationen für eine Nutzungsrecht-Verwaltungseinrichtung, welche die Bereitstellung eines Nutzungsrechts für die Informationsverarbeitungseinrichtung verwaltet, wobei das Nutzungsrecht als Information bezüglich der Verwendung des Inhalts dient.

**10.** Nutzungsrecht-Verwaltungseinrichtung, welche die Bereitstellung eines Nutzungsrechts, das als Information bezüglich der Verwendung des Inhalts dient, einschließlich Inhaltsdaten und Inhaltsdaten begleitende Informationen für eine Informationsverarbeitungseinrichtung verwaltet, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei die Nutzungsrecht-Verwaltungseinrichtung aufweist:

Erlangungsmittel zum Erlangen der zweiten Schlüsselinformationen von einer Informationsbereitstellungseinrichtung, die den Inhalt für die Informationsverarbeitungseinrichtung bereitstellt;

Erzeugungsmittel zum Erzeugen des Nutzungsrechts aufgrund einer Anforderung der Informationsverarbeitungseinrichtung, das mit dem Inhalt zur Verwendung durch die Informationsverarbeitungseinrichtung verknüpft ist; und **dadurch gekennzeichnet, dass** die Nutzungsrecht-Verwaltungseinrichtung weiterhin aufweist:

Bereitstellungsmittel zum Bereitstellen eines Geräteknotenschlüssels, der mit einem Knoten in einer mit der Informationsverarbeitungseinrichtung verknüpften Baumstruktur verknüpft ist, wobei der Geräteknotenschlüssel in einem System für die Verwaltung der privaten Schlüsselinformationen und des Nutzungsrechts vorhanden ist, für die Informationsverarbeitungseinrichtung aufgrund einer Anforderung der Informationsverarbeitungseinrichtung,

wobei das Erzeugungsmittel das Nutzungsrecht erzeugt, welches Informationen enthält, die durch Verschlüsselung der vom Erlangungsmittel erlangten zweiten Schlüsselinformationen mittels öffentlicher Schlüsselinformationen in Verbindung mit den für die Informationsverarbeitungseinrichtung bereitgestellten privaten Schlüsselinformationen erzeugt werden.

**11.** Nutzungsrecht-Verwaltungsverfahren für eine Nutzungsrecht-Verwaltungseinrichtung, welche die Bereitstellung eines Nutzungsrechts, das als Information bezüglich der Verwendung des Inhalts dient, einschließlich Inhaltsdaten und Inhaltsdaten begleitende Informationen für eine Informationsverarbeitungseinrichtung verwaltet, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei das Nutzungsrecht-Verwaltungsverfahren aufweist:

einen Erlangungsschritt des Erlangens der zweiten Schlüsselinformationen von einer Informationsbereitstellungseinrichtung, die den Inhalt für die Informationsverarbeitungseinrichtung bereitstellt;

einen Erzeugungsschritt des Erzeugens des Nutzungsrechts aufgrund einer Anforderung der Informationsverarbeitungseinrichtung, das mit dem Inhalt zur Verwendung durch die Informationsverarbeitungseinrichtung verknüpft ist;

einen Nutzungsrecht-Bereitstellungsschritt des Bereitstellens des im Erzeugungsschritt erzeugten Nutzungsrechts für die Informationsverarbeitungseinrichtung; und **dadurch gekennzeichnet, dass** das Nutzungsrecht-Verwaltungsverfahren weiterhin aufweist:

einen Bereitstellungsschritt des Bereitstellens eines Geräteknotenschlüssels, der mit einem Knoten in einer mit der Informationsverarbeitungseinrichtung verknüpften Baumstruktur verknüpft ist, wobei der Geräteknotenschlüssel in einem System für die Verwaltung der privaten Schlüsselinformationen und des Nutzungsrechts vorhanden ist, für die Informationsverarbeitungseinrichtung aufgrund einer Anforderung der Informationsverarbeitungseinrichtung, wobei im Erzeugungsschritt das Nutzungsrecht erzeugt wird, welches Informationen enthält, die durch Verschlüsselung der vom Erlangungsmittel erlangten zweiten Schlüsselinformationen mittels öffentlicher Schlüsselinformationen in Verbindung mit den für die Informationsverarbeitungseinrichtung bereitgestellten privaten Schlüsselinformationen erzeugt werden.

12. Aufzeichnungsmedium mit einem darauf gespeicherten computerlesbaren Programm für eine Nutzungsrecht-Verwaltungseinrichtung, welche die Bereitstellung eines Nutzungsrechts, das als Information bezüglich der Verwendung des Inhalts dient, einschließlich Inhaltsdaten und die Inhaltsdaten begleitende Informationen an eine Informationsverarbeitungseinrichtung verwaltet, welche Inhaltsdaten mittels der dritten Schlüsselinformationen entschlüsselt, die basierend auf ersten Schlüsselinformationen und zweiten Schlüsselinformationen erzeugt werden, und welche die Inhaltsdaten verwendet, wobei das Programm aufweist:

einen Abruf-Steuerschritt des Steuerns des Abrufs der zweiten Schlüsselinformationen von einer Informationsbereitstellungseinrichtung, die den Inhalt für die Informationsverarbeitungseinrichtung bereitstellt;
einen Erzeugungs-Steuerschritt des Steuerns der Erzeugung des Nutzungsrechts aufgrund einer Anforderung der Informationsverarbeitungseinrichtung, das mit dem Inhalt zur Verwendung durch die Informationsverarbeitungseinrichtung verknüpft ist;
einen Nutzungsrechtbereitstellungs-Steuerschritt des Steuerns der Bereitstellung des im Erzeugungs-Steuerschritt erzeugten Nutzungsrechts für die Informationsverarbeitungseinrichtung; und **dadurch gekennzeichnet, dass** das Programm weiterhin aufweist:
einen Bereitstellungs-Steuerschritt des Steuerns der Bereitstellung eines Geräteknotenschlüssels, der mit einem Knoten in einer mit der Informationsverarbeitungseinrichtung verknüpften Baumstruktur verknüpft ist, wobei der Geräteknotenschlüssel in einem System für die Verwaltung der privaten Schlüsselinformationen und des Nutzungsrechts vorhanden ist, für die Informationsverarbeitungseinrichtung aufgrund einer Anforderung der Informationsverarbeitungseinrichtung,
wobei im Erzeugungs-Steuerschritt das Nutzungsrecht erzeugt wird, welches Informationen enthält, die durch Verschlüsselung der vom Erlangungsmittel erlangten zweiten Schlüsselinformationen mittels öffentlicher Schlüsselinformationen in Verbindung mit den für die Informationsverarbeitungseinrichtung bereitgestellten privaten Schlüsselinformationen erzeugt werden.

13. Programm, das einen Computer, der eine Nutzungsrecht-Verwaltungseinrichtung steuert, welche die Bereitstellung eines Nutzungsrechts, das als Information bezüglich der Verwendung des Inhalts dient, einschließlich Inhaltsdaten und Inhaltsdaten begleitende Informationen für eine Informationsverarbeitungseinrichtung verwaltet, die Inhaltsdaten mittels der dritten Schlüsselinformationen entschlüsselt, die basierend auf den ersten Schlüsselinformationen und zweiten Schlüsselinformationen erzeugt werden, sowie die Inhaltsdaten verwendet, zur Ausführung eines Prozesses veranlasst, der umfasst:

einen Abruf-Steuerschritt des Steuerns des Abrufs der zweiten Schlüsselinformationen von einer Informationsbereitstellungseinrichtung, die den Inhalt für die Informationsverarbeitungseinrichtung bereitstellt;
einen Erzeugungs-Steuerschritt des Steuerns der Erzeugung des Nutzungsrechts aufgrund einer Anforderung der Informationsverarbeitungseinrichtung, das mit dem Inhalt zur Verwendung durch die Informationsverarbeitungseinrichtung verknüpft ist;
einen Nutzungsrechtbereitstellungs-Steuerschritt des Steuerns der Bereitstellung des im Erzeugungs-Steuerschritt erzeugten Nutzungsrechts für die Informationsverarbeitungseinrichtung; und **dadurch gekennzeichnet, dass** der Prozess weiterhin aufweist:
einen Bereitstellungs-Steuerschritt des Steuerns der Bereitstellung eines Geräteknotenschlüssels, der mit einem Knoten in einer mit der Informationsverarbeitungseinrichtung verknüpften Baumstruktur verknüpft ist, wobei der Geräteknotenschlüssel in einem System für die Verwaltung der privaten Schlüsselinformationen und des Nutzungsrechts vorhanden ist, für die Informationsverarbeitungseinrichtung aufgrund einer Anforderung der Informationsverarbeitungseinrichtung,
wobei im Erzeugungs-Steuerschritt das Nutzungsrecht erzeugt wird, welches Informationen enthält, die durch Verschlüsselung der vom Erlangungsmittel erlangten zweiten Schlüsselinformationen mittels öffentlicher Schlüsselinformationen in Verbindung mit den für die Informationsverarbeitungseinrichtung bereitgestellten privaten Schlüsselinformationen erzeugt werden.

**Revendications**

1. Dispositif de traitement d'informations qui déchiffre des données d'un contenu au moyen d'informations d'une troisième clé (Kc) générées en se basant sur des informations d'une première clé (EKB; E(Kroot, Kekb)) et des informations d'une deuxième clé (Ksub), et qui utilise les données de contenu, comprenant :

   un moyen d'obtention de contenu pour obtenir un contenu incluant les informations de la première clé et les données de contenu chiffrées par les informations de la troisième clé ;
   un moyen d'obtention de droit d'utilisation pour obtenir un droit d'utilisation (E(Kpub, Ksub)) servant d'informations concernant l'utilisation du contenu, le droit d'utilisation incluant les informations de la deuxième clé ;
   un moyen de génération d'informations de clé pour générer les informations de la troisième clé en se basant sur les informations de la première clé incluses dans le contenu obtenu par le moyen d'obtention de contenu et sur les informations de la deuxième clé extraites du droit d'utilisation obtenu par le moyen d'obtention de droit d'utilisation ;
   un moyen de déchiffrement pour déchiffrer les données de contenu au moyen des informations de la troisième clé générées par le moyen de génération d'informations de clé ;
   **caractérisé en ce qu'**il comprend en outre :
   un moyen de demande pour effectuer une demande, à un dispositif de gestion du droit d'utilisation qui gère la fourniture de droit d'utilisation, d'informations de clé privée (Kpri) et d'une clé de noeud de dispositif (DNK) associée à un noeud dans une structure arborescente associée au dispositif de traitement d'informations, la clé de noeud de dispositif se trouvant sur un système de gestion du droit d'utilisation ; et
   un moyen d'obtention pour obtenir les informations de la clé privée et la clé de noeud de dispositif, qui sont fournies par le dispositif de gestion du droit d'utilisation, en réponse à la demande du moyen de demande,
   dans lequel le moyen de génération d'informations de clé extrait du contenu les informations de la première clé en se basant sur la clé de noeud de dispositif obtenue par le moyen d'obtention, en utilisant la clé de noeud de dispositif pour extraire une clé racine (Kroot) de la structure arborescente et extraire les informations de la première clé en utilisant la clé racine, et le moyen de génération d'informations de clé extrait les informations de la deuxième clé du droit d'utilisation en se basant sur les informations de clé privée obtenues par le moyen d'obtention.

2. Dispositif de traitement d'informations selon la revendication 1, dans lequel le moyen de génération d'informations de clé concerne le résultat du OU exclusif des informations de la première clé et des informations de la deuxième clé comme informations de la troisième clé.

3. Procédé de traitement d'informations pour un dispositif de traitement d'informations qui déchiffre des données d'un contenu au moyen d'informations d'une troisième clé générée en se basant sur des informations d'une première clé et des informations d'une deuxième clé, et qui utilise les données de contenu, le procédé de traitement d'informations comprenant :

   une étape d'obtention de contenu pour obtenir un contenu incluant les informations de la première clé et les données de contenu chiffrées par les informations de la troisième clé ;
   une étape d'obtention de droit d'utilisation pour obtenir un droit d'utilisation servant d'informations concernant l'utilisation du contenu, le droit d'utilisation incluant les informations de la deuxième clé ;
   une étape de génération d'informations de clé pour générer les informations de la troisième clé en se basant sur les informations de la première clé incluses dans le contenu obtenu à l'étape d'obtention de contenu et sur les informations de la deuxième clé extraites du droit d'utilisation obtenu à l'étape d'obtention de droit d'utilisation ;
   **caractérisé en ce qu'**il comprend en outre :
   une étape de demande pour effectuer une demande à un dispositif de gestion du droit d'utilisation qui gère la fourniture de droit d'utilisation, d'informations de clé privée et une clé de noeud de dispositif associée à un noeud dans une structure arborescente associée au dispositif de traitement d'informations, la clé de noeud de dispositif se trouvant sur un système de gestion du droit d'utilisation ; et
   une étape d'obtention pour obtenir les informations de la clé privée et la clé de noeud de dispositif, qui sont fournies par le dispositif de gestion du droit d'utilisation, en réponse à l'étape de demande,
   dans lequel, à l'étape de génération d'informations de clé, les informations de la première clé sont extraites du contenu en se basant sur la clé de noeud de dispositif obtenue à l'étape d'obtention, en utilisant la clé de noeud de dispositif pour extraire une clé racine de la structure arborescente et extraire les informations de la première clé en utilisant la clé racine, et

à l'étape de génération d'informations de clé, les informations de la deuxième clé sont extraites du droit d'utilisation en se basant sur les informations de clé privée obtenues à l'étape d'obtention ; et

une étape de déchiffrement pour déchiffrer les données de contenu au moyen des informations de la troisième clé générées à l'étape de génération d'informations de clé.

4. Support d'enregistrement sur lequel est enregistré un programme lisible par un ordinateur pour un dispositif de traitement d'informations qui déchiffre des données d'un contenu au moyen d'informations d'une troisième clé générées en se basant sur des informations d'une première clé et des informations d'une deuxième clé, et qui utilise les données de contenu, le programme comprenant :

une étape de commande d'obtention de contenu pour commander l'obtention d'un contenu incluant les informations de la première clé et les données de contenu chiffrées par les informations de la troisième clé ;

une étape de commande d'obtention de droit d'utilisation pour commander l'obtention d'un droit d'utilisation servant d'informations concernant l'utilisation du contenu, le droit d'utilisation incluant les informations de la deuxième clé ;

une étape de commande de génération d'informations de clé pour commander la génération des informations de la troisième clé en se basant sur les informations de la première clé incluses dans le contenu obtenu à l'étape de commande d'obtention de contenu et sur les informations de la deuxième clé extraites du droit d'utilisation obtenu à l'étape de commande d'obtention de droit d'utilisation ;

**caractérisé en ce qu'**il comprend en outre :

une étape de commande de demande pour commander une demande à un dispositif de gestion du droit d'utilisation qui gère la fourniture de droit d'utilisation, d'informations de clé privée et une d'une clé de noeud de dispositif associée à un noeud dans une structure arborescente associée au dispositif de traitement d'informations, la clé de noeud de dispositif se trouvant sur un système de gestion du droit d'utilisation ; et

une étape de commande d'obtention pour commander l'obtention des informations de la clé privée et la clé de noeud de dispositif, qui sont fournies par le dispositif de gestion du droit d'utilisation, en réponse à l'étape de commande de demande,

dans lequel, à l'étape de commande de génération d'informations de clé, les informations de la première clé sont extraites du contenu en se basant sur la clé de noeud de dispositif obtenue à l'étape d'obtention, en utilisant la clé de noeud de dispositif pour extraire une clé racine de la structure arborescente et extraire les informations de la première clé en utilisant la clé racine, et

à l'étape de commande de génération d'informations de clé, les informations de la deuxième clé sont extraites du droit d'utilisation en se basant sur les informations de clé privée obtenues à l'étape de commande d'obtention ; et

une étape de commande de déchiffrement pour commander le déchiffrement des données de contenu au moyen des informations de la troisième clé générées à l'étape de commande de génération d'informations de clé.

5. Programme pour faire exécuter un processus par un ordinateur qui commande un dispositif de traitement d'informations qui déchiffre des données d'un contenu au moyen d'informations d'une troisième clé générées en se basant sur des informations d'une première clé et des informations d'une deuxième clé, et qui utilise les données de contenu, le processus comprenant :

une étape de commande d'obtention de contenu pour commander l'obtention d'un contenu incluant les informations de la première clé et les données de contenu chiffrées par les informations de la troisième clé ;

une étape de commande d'obtention de droit d'utilisation pour commander l'obtention d'un droit d'utilisation servant d'informations concernant l'utilisation du contenu, le droit d'utilisation incluant les informations de la deuxième clé ;

une étape de commande de génération d'informations de clé pour commander la génération des informations de la troisième clé en se basant sur les informations de la première clé incluses dans le contenu obtenu à l'étape de commande d'obtention de contenu et sur les informations de la deuxième clé extraites du droit d'utilisation obtenu à l'étape de commande d'obtention de droit d'utilisation ;

**caractérisé en ce qu'**il comprend en outre :

une étape de commande de demande pour commander une demande à un dispositif de gestion du droit d'utilisation qui gère la fourniture de droit d'utilisation, d'informations de clé privée et une clé de noeud de dispositif associée à un noeud dans une structure arborescente associée au dispositif de traitement d'informations, la clé de noeud de dispositif se trouvant sur un système de gestion du droit d'utilisation ; et

une étape de commande d'obtention pour commander l'obtention des informations de la clé privée et la clé de noeud de dispositif, qui sont fournies par le dispositif de gestion du droit d'utilisation, en réponse à l'étape de commande de demande,

dans lequel, à l'étape de commande de génération d'informations de clé, les informations de la première clé sont extraites du contenu en se basant sur la clé de noeud de dispositif obtenue à l'étape de commande d'obtention, en utilisant la clé de noeud de dispositif pour extraire une clé racine de la structure arborescente et extraire les informations de la première clé en utilisant la clé racine, et

à l'étape de commande de génération d'informations de clé, les informations de la deuxième clé sont extraites du droit d'utilisation en se basant sur les informations de clé privée obtenues à l'étape de commande d'obtention ; et

une étape de commande de déchiffrement pour commander le déchiffrement des données de contenu au moyen des informations de la troisième clé générées à l'étape de commande de génération d'informations de clé.

6. Dispositif de fourniture d'informations qui fournit un contenu incluant des données de contenu et des informations accompagnant les données de contenu, à un dispositif de traitement d'informations qui déchiffre les données de contenu au moyen d'informations d'une troisième clé générées en se basant sur des informations d'une première clé et des informations d'une deuxième clé, et qui utilise les données de contenu, le dispositif de fourniture d'informations comprenant :

un moyen de génération d'informations de clé pour générer les informations de la première clé et les informations de la deuxième clé et pour générer les informations de la troisième clé pouvant être obtenues par le dispositif de traitement d'informations en se basant sur les informations de la première clé et sur les informations de la deuxième clé ;

un moyen de chiffrement pour chiffrer les données de contenu au moyen des informations de la troisième clé générées par le moyen de génération d'informations de clé ;

**caractérisé en ce qu'**il comprend en outre :
un moyen de génération de contenu pour générer le contenu incluant les informations de la première clé générées par le moyen de génération d'informations de clé et chiffrées en utilisant une clé de noeud de dispositif fournie au dispositif de traitement d'informations, la clé de noeud de dispositif étant associée à un noeud dans une structure arborescente associée au dispositif de traitement d'informations, les informations de la première clé étant chiffrées en utilisant la clé de noeud de dispositif pour chiffrer une clé racine de la structure arborescente et chiffrer les informations de la première clé en utilisant la clé racine ; et

un moyen de fourniture pour fournir les informations de la deuxième clé à un dispositif de gestion du droit d'utilisation qui gère la fourniture d'un droit d'utilisation au dispositif de traitement d'informations, le droit d'utilisation servant d'informations concernant l'utilisation du contenu.

7. Procédé de fourniture d'informations pour un dispositif de fourniture d'informations qui fournit un contenu incluant des données de contenu et des informations accompagnant les données de contenu, à un dispositif de traitement d'informations qui déchiffre les données de contenu au moyen d'informations d'une troisième clé générées en se basant sur des informations d'une première clé et des informations d'une deuxième clé, et qui utilise les données de contenu, le procédé de fourniture d'informations comprenant :

une étape de génération d'informations de clé pour générer les informations de la première clé et les informations de la deuxième clé et pour générer les informations de la troisième clé pouvant être obtenues par le dispositif de traitement d'informations en se basant sur les informations de la première clé et sur les informations de la deuxième clé ;

une étape de chiffrement pour chiffrer les données de contenu au moyen des informations de la troisième clé générées à l'étape de génération d'informations de clé ;

**caractérisé en ce qu'**il comprend en outre :
une étape de génération de contenu pour générer le contenu incluant les informations de la première clé générées à l'étape de génération d'informations de clés et chiffrées en utilisant une clé de noeud de dispositif fournie au dispositif de traitement d'informations, la clé de noeud de dispositif étant associée à un noeud dans une structure arborescente associée au dispositif de traitement d'informations, les informations de la première clé étant chiffrées en utilisant la clé de noeud de dispositif pour chiffrer une clé racine de la structure arborescente et chiffrer les informations de la première clé en utilisant la clé racine ; et

une étape de fourniture pour fournir les informations de la deuxième clé à un dispositif de gestion du droit d'utilisation qui gère la fourniture d'un droit d'utilisation au dispositif de traitement d'informations, le droit d'utilisation servant d'informations concernant l'utilisation du contenu.

8. Support d'enregistrement sur lequel est enregistré un programme lisible par un ordinateur pour un dispositif de fourniture d'informations qui fournit un contenu incluant des données de contenu et des informations accompagnant les données de contenu, à un dispositif de traitement d'informations qui déchiffre les données de contenu au moyen d'informations d'une troisième clé générées en se basant sur des informations d'une première clé et des informations d'une deuxième clé, et qui utilise les données de contenu, le programme comprenant :

une étape de commande de génération d'informations de clé pour commander la génération des informations de la première clé et des informations de la deuxième clé et la génération des informations de la troisième clé pouvant être obtenues par le dispositif de traitement d'informations en se basant sur les informations de la première clé et sur les informations de la deuxième clé ;

une étape de commande de chiffrement pour commander le chiffrement des données de contenu au moyen des informations de la troisième clé générées à l'étape de commande de génération d'informations de clé ;

**caractérisé en ce qu'**il comprend en outre :
une étape de commande de génération de contenu pour commander la génération du contenu incluant les informations de la première clé générées à l'étape de commande de génération d'informations de clés et chiffrées en utilisant une clé de noeud de dispositif fournie au dispositif de traitement d'informations, la clé de noeud de dispositif étant associée à un noeud dans une structure arborescente associée au dispositif de traitement d'informations, les informations de la première clé étant chiffrées en utilisant la clé de noeud de dispositif pour chiffrer une clé racine de la structure arborescente et chiffrer les informations de la première clé en utilisant la clé racine ; et

une étape de commande de fourniture pour commander la fourniture des informations de la deuxième clé à un dispositif de gestion du droit d'utilisation qui gère la fourniture d'un droit d'utilisation au dispositif de traitement d'informations, le droit d'utilisation servant d'informations concernant l'utilisation du contenu.

**9.** Programme pour faire exécuter par un ordinateur qui commande un dispositif de fourniture d'informations qui fournit un contenu incluant des données de contenu et des informations accompagnant les données de contenu à un dispositif de traitement d'informations qui déchiffre les données de contenu au moyen d'informations d'une troisième clé générées en se basant sur des informations d'une première clé et des informations d'une deuxième clé, et qui utilise les données de contenu, pour exécuter un processus comprenant :

une étape de commande de génération d'informations de clé pour commander la génération des informations de la première clé et des informations de la deuxième clé et la génération des informations de la troisième clé pouvant être obtenues par le dispositif de traitement d'informations en se basant sur les informations de la première clé et sur les informations de la deuxième clé ;

une étape de commande de chiffrement pour commander le chiffrement des données de contenu au moyen des informations de la troisième clé générées à l'étape de commande de génération d'informations de clé ;

**caractérisé en ce qu'**il comprend en outre :
une étape de commande de génération de contenu pour commander la génération du contenu incluant les informations de la première clé générées à l'étape de commande de génération d'informations de clés et chiffrées en utilisant une clé de noeud de dispositif fournie au dispositif de traitement d'informations, la clé de noeud de dispositif étant associée à un noeud dans une structure arborescente associée au dispositif de traitement d'informations, les informations de la première clé étant chiffrées en utilisant la clé de noeud de dispositif pour chiffrer une clé racine de la structure arborescente et chiffrer les informations de la première clé en utilisant la clé racine ; et

une étape de commande de fourniture pour commander la fourniture des informations de la deuxième clé à un dispositif de gestion du droit d'utilisation qui gère la fourniture d'un droit d'utilisation au dispositif de traitement d'informations, le droit d'utilisation servant d'informations concernant l'utilisation du contenu.

**10.** Dispositif de gestion du droit d'utilisation qui gère la fourniture d'un droit d'utilisation servant d'informations concernant l'utilisation d'un contenu incluant des données de contenu et des informations accompagnant les données de contenu à un dispositif de traitement d'informations qui déchiffre les données de contenu au moyen d'informations d'une troisième clé générées en se basant sur des informations d'une première clé et des informations d'une deuxième clé, et qui utilise les données de contenu, le dispositif de gestion du droit d'utilisation comprenant :

un moyen d'obtention pour obtenir les informations de la deuxième clé depuis un dispositif de fourniture d'informations fournissant le contenu au dispositif de traitement d'informations ;
un moyen de génération pour générer le droit d'utilisation associé au contenu pour être utilisé par le dispositif de traitement d'informations en réponse à une demande du dispositif de traitement d'informations ;

un moyen de fourniture de droit d'utilisation pour fournir au dispositif de traitement d'informations le droit d'utilisation généré par le moyen de génération ; et

**caractérisé en ce qu'**il comprend en outre :

un moyen de fourniture pour fournir une clé de noeud de dispositif associée à un noeud dans une structure arborescente associée au dispositif de traitement d'informations, la clé de noeud de dispositif se trouvant sur un système de gestion d'informations de clé privée et de droit d'utilisation, au dispositif de traitement d'informations en réponse à une demande du dispositif de traitement d'informations,

dans lequel le moyen de génération génère le droit d'utilisation incluant les informations produites par chiffrement des informations de la deuxième clé obtenues par le moyen d'obtention en utilisant des informations de clé publique associées à des informations de clé privée fournies au dispositif de traitement d'informations.

11. Procédé de gestion du droit d'utilisation pour un dispositif de gestion du droit d'utilisation qui gère la fourniture d'un droit d'utilisation servant d'informations concernant l'utilisation d'un contenu incluant des données de contenu et des informations accompagnant les données de contenu, à un dispositif de traitement d'informations qui déchiffre les données de contenu au moyen d'informations d'une troisième clé générées en se basant sur des informations d'une première clé et des informations d'une deuxième clé, et qui utilise les données de contenu, le procédé de gestion du droit d'utilisation comprenant :

une étape d'obtention pour obtenir les informations de la deuxième clé depuis un dispositif de fourniture d'informations fournissant le contenu au dispositif de traitement d'informations ;

une étape de génération pour générer le droit d'utilisation associé au contenu pour être utilisé par le dispositif de traitement d'informations en réponse à une demande du dispositif de traitement d'informations ;

une étape de fourniture de droit d'utilisation pour fournir au dispositif de traitement d'informations le droit d'utilisation généré à l'étape de génération ; et

**caractérisé en ce qu'**il comprend en outre :

une étape de fourniture pour fournir une clé de noeud de dispositif associée à un noeud dans une structure arborescente associée au dispositif de traitement d'informations, la clé de noeud de dispositif se trouvant sur un système de gestion d'informations de clé privée et du droit d'utilisation, au dispositif de traitement d'informations en réponse à une demande du dispositif de traitement d'informations,

dans lequel, à l'étape de génération, le droit d'utilisation est généré, le droit d'utilisation incluant les informations produites par chiffrement des informations de la deuxième clé en utilisant des informations de clé publique associées à des informations de clé privée fournies au dispositif de traitement d'informations.

12. Support d'enregistrement sur lequel est enregistré un programme lisible par un ordinateur pour un dispositif de gestion du droit d'utilisation qui gère la fourniture d'un droit d'utilisation servant d'informations concernant l'utilisation d'un contenu incluant des données de contenu et des informations accompagnant les données de contenu à un dispositif de traitement d'informations qui déchiffre les données de contenu au moyen d'informations d'une troisième clé générées en se basant sur des informations d'une première clé et des informations d'une deuxième clé, et qui utilise les données de contenu, le programme comprenant :

une étape de commande d'obtention pour commander l'obtention des informations de la deuxième clé d'un dispositif de fourniture d'informations fournissant le contenu au dispositif de traitement d'informations ;

une étape de commande de génération pour commander la génération du droit d'utilisation associé au contenu pour être utilisé par le dispositif de traitement d'informations en réponse à une demande du dispositif de traitement d'informations ;

une étape de commande de fourniture de droit d'utilisation pour commander la fourniture du droit d'utilisation généré à l'étape de génération au dispositif de traitement d'informations ; et

**caractérisé en ce qu'**il comprend en outre :

une étape de commande de fourniture pour commander la fourniture d'une clé de noeud de dispositif associée à un noeud dans une structure arborescente associée au dispositif de traitement d'informations, la clé de noeud de dispositif se trouvant sur un système de gestion d'informations de clé privée et du droit d'utilisation, au dispositif de traitement d'informations en réponse à une demande du dispositif de traitement d'informations,

dans lequel, à l'étape de commande de génération, le droit d'utilisation est généré, le droit d'utilisation incluant les informations produites par chiffrement des informations de la deuxième clé en utilisant des informations de clé publique associées à des informations de clé privée fournies au dispositif de traitement d'informations.

**13.** Programme pour faire exécuter par un ordinateur qui commande un dispositif de gestion du droit d'utilisation qui gère la fourniture d'un droit d'utilisation servant d'informations concernant l'utilisation d'un contenu incluant des données de contenu et des informations accompagnant les données de contenu à un dispositif de traitement d'informations qui déchiffre les données de contenu au moyen d'informations d'une troisième clé générées en se basant sur des informations d'une première clé et des informations d'une deuxième clé, et qui utilise les données de contenu pour exécuter un processus comprenant :

une étape de commande d'obtention pour commander l'obtention des informations de la deuxième clé d'un dispositif de fourniture d'informations fournissant le contenu au dispositif de traitement d'informations ;
une étape de commande de génération pour commander la génération du droit d'utilisation associé au contenu pour être utilisé par le dispositif de traitement d'informations en réponse à une demande du dispositif de traitement d'informations ;
une étape de commande de fourniture de droit d'utilisation pour commander la fourniture du droit d'utilisation généré à l'étape de génération au dispositif de traitement d'informations ; et
**caractérisé en ce qu'**il comprend en outre :
une étape de commande de fourniture pour commander la fourniture d'une clé de noeud de dispositif associée à un noeud dans une structure arborescente associée au dispositif de traitement d'informations, la clé de noeud de dispositif se trouvant sur un système de gestion des informations de clé privée et de droit d'utilisation, au dispositif de traitement d'informations en réponse à une demande du dispositif de traitement d'informations,
dans lequel, à l'étape de commande de génération, le droit d'utilisation est généré, le droit d'utilisation incluant les informations produites par chiffrement des informations de la deuxième clé en utilisant des informations de clé publique associées à des informations de clé privée fournies au dispositif de traitement d'informations.

# FIG. 1

DATA 1

| EKB | E (Kc1) | Kc1 (Content 1) |
|-----|---------|-----------------|

Kroot

Kc1 ——————————→

Content 1

DATA 2

| EKB | E (Kc2) | Kc2 (Content 2) |
|-----|---------|-----------------|

Kroot

Kc2 ——————————→

Content 2

# FIG. 2

EP 1 496 642 B1

## FIG. 3

FIG. 4

# FIG. 5

# FIG. 6

2301 — KR (ROOT KEY)

2302 — NODE KEY

MEMORY STICK (TRADEMARK)

M LEVELS

T-system

2305

2304
CATEGORY (2^M PIECES)

SUBCATEGORY

PLAYBACK-ONLY UNIT — 2306

PHONE WITH MUSIC PLAYBACK FUNCTION — 2307

N LEVELS

PHS

2303

2308

CELLULAR PHONE — 2309

LEAF KEY

EP 1 496 642 B1

# FIG. 7

| VERSION: t | |
|---|---|
| INDEX | ENCRYPTION KEY |
| 0 | Enc(K(t)0, K(t)R) |
| 00 | Enc(K(t)00, K(t)0) |
| 000 | Enc(K000, K(t)00) |
| 001 | Enc(K(t)001, K(t)00) |
| 0010 | Enc(K0010, K(t)001) |

# FIG. 8

| VERSION: t | |
|---|---|
| INDEX | ENCRYPTION KEY |
| 000 | Enc(K000, K(t)00) |
| 001 | Enc(K(t)001, K(t)00) |
| 0010 | Enc(K0010, K(t)001) |

# FIG. 9

EP 1 496 642 B1

| VERSION: t | |
|---|---|
| INDEX | ENCRYPTION KEY |
| 000 | Enc(K000, K(t)00) |
| 001 | Enc(K(t)001, K(t)00) |
| 0010 | Enc(K0010, K(t)001) |
| Enc(K(t)00, K(t)con) | |

RECORDING MEDIUM

K000

EKB PROCESSING    K(t)00

DECRYPT    K(t)con

K0000

ENCRYPT → STORE

DEVICE 0

# FIG. 10

| | |
|---|---|
| VERSION | DEPTH |
| DATA POINTER | TAG POINTER |
| SIGNATURE POINTER | RESERVED |
| DATA PORTION(E(k0, KR), ...) | |
| TAG PORTION ({0, 0}, {1, 1}, ...) | |
| SIGNATURE | |

61 — VERSION
62 — DEPTH
63 — DATA POINTER
64 — TAG POINTER
65 — SIGNATURE POINTER
66 — DATA PORTION
67 — TAG PORTION
68 — SIGNATURE

FIG. 11

| TOP NODE ADDRESS: KR | |
|---|---|
| DATA (ENCRYPTION KEY) | TAG |
| Enc(K(t)0, K(t)R) | {0, 1} |
| Enc(K(t)00, K(t)0) | {0, 0} |
| Enc(K000, K(t)00) | {1, 1} |
| Enc(K(t)001, K(t)00) | {0, 1} |
| Enc(K0010, K(t)001) | {1, 1} |

DATA: Eno(K(t)0, K(t)R), Eno(K(t)00, K(t)0), ......
TAG: {0, 1}, {0, 0}, {1, 1}...

EP 1 496 642 B1

FIG. 12

SERVICE DATA

Kpri

USAGE RIGHT

E(Ksub)

EKB

EKB(Kekb)

SERVICE DATA

DNK

Kc = Kekb xor Ksub

# FIG. 13

```
┌─────────────────────────────────────┐
│   START SERVICE DATA OBTAINING       │
│   PROCESS BY CLIENT                  │
└─────────────────────────────────────┘
                  │
                  ▼
┌─────────────────────────────────────┐
│      ACCESS LICENSE SERVER           │  S1
└─────────────────────────────────────┘
                  │
                  ▼
┌─────────────────────────────────────┐
│  REQUEST SERVICE DATA ASSOCIATED     │  S2
│  WITH SERVICE SPECIFIED BY USER      │
└─────────────────────────────────────┘
                  │
                  ▼
┌─────────────────────────────────────┐
│      RECEIVE SERVICE DATA            │  S3
└─────────────────────────────────────┘
                  │
                  ▼
┌─────────────────────────────────────┐
│      STORE SERVICE DATA              │  S4
└─────────────────────────────────────┘
                  │
                  ▼
          ┌───────────────┐
          │     END       │
          └───────────────┘
```

# FIG. 14

| LEAF ID |
|---|
| DNK |
| PRIVATE KEY OF CLIENT |
| PUBLIC KEY OF CLIENT |
| PUBLIC KEY OF LICENSE SERVER |
| CERTIFICATE |

# FIG. 15

```
┌─────────────────────────────────────┐
│  START SERVICE DATA PROVIDING        │
│  PROCESS BY LICENSE SERVER           │
└─────────────────────────────────────┘
                    │
                    ▼
         ┌──────────────────────┐
    NO   │  ACCESSED BY CLIENT?  │   S11
         └──────────────────────┘
                    │ YES
                    ▼
┌─────────────────────────────────────┐
│  GENERATE SERVICE DATA ASSOCIATED    │  S12
│  WITH SERVICE REQUESTED BY CLIENT    │
└─────────────────────────────────────┘
                    │
                    ▼
┌─────────────────────────────────────┐
│  TRANSMIT SERVICE DATA ALONG WITH    │  S13
│  DEFAULT USAGE RULES FOR USING SERVICE│
└─────────────────────────────────────┘
                    │
                    ▼
              ┌──────────┐
              │   END    │
              └──────────┘
```

# FIG. 16

```
┌─────────────────────────────────────┐
│   START CONTENT GENERATING          │
│   PROCESS BY CONTENT SERVER         │
└─────────────────────────────────────┘
                  │
                  ▼
┌─────────────────────────────────────┐  S21
│          GENERATE Kc                │
└─────────────────────────────────────┘
                  │
                  ▼
┌─────────────────────────────────────┐  S22
│          GENERATE Ksub              │
└─────────────────────────────────────┘
                  │
                  ▼
┌─────────────────────────────────────┐  S23
│   GENERATE Kekb                     │
│   (Kekb = Kc xor Ksub)              │
└─────────────────────────────────────┘
                  │
                  ▼
┌─────────────────────────────────────┐  S24
│   ENCRYPT Kekb USING Kroot          │
│   INCLUDED IN EKB                   │
│   (E(Kroot, Kekb))                  │
└─────────────────────────────────────┘
                  │
                  ▼
┌─────────────────────────────────────┐  S25
│   ENCRYPT CONTENT USING Kc          │
│   (E(Kc, Cont))                     │
└─────────────────────────────────────┘
                  │
                  ▼
┌─────────────────────────────────────┐  S26
│   GENERATE AND STORE                │
│   CONTENT INCLUDING                 │
│   E(Kroot, Kekb) AND E(Kc, Cont)    │
└─────────────────────────────────────┘
                  │
                  ▼
┌─────────────────────────────────────┐  S27
│   PROVIDE Ksub TO                   │
│   LICENSE SERVER                    │
└─────────────────────────────────────┘
                  │
                  ▼
            ┌───────────┐
            │    END    │
            └───────────┘
```

## FIG. 17

| Header | Data |
|---|---|

| EncryptionBlock1 | EncryptionBlock2 | EncryptionBlock3 | ... |
|---|---|---|---|

| Content info. | URL | Lic. ID | EKB | E(Kroot, Kekb) | Attribute | Signatures |
|---|---|---|---|---|---|---|

| IV | Seed | $E_{K'c}$(data) |
|---|---|---|

| CID | Codec, etc... |
|---|---|

| E(DNK, Kroot) |
|---|

CBC mode
K'c=Hash(Kc, Seed)

# FIG. 18

```
┌─────────────────────────────────┐
│  START SUB-KEY OBTAINING        │
│  PROCESS BY LICENSE SERVER      │
└─────────────────────────────────┘
                 │
                 ▼
      ┌──────────────────────────┐  S41
   ───┤  IS Ksub TRANSMITTED?    ├
  NO  └──────────────────────────┘
                 │ YES
                 ▼
      ┌──────────────────────────┐  S42
      │     OBTAIN Ksub          │
      └──────────────────────────┘
                 │
                 ▼
            ┌─────────┐
            │   END   │
            └─────────┘
```

# FIG. 19

START DOWNLOADING
PROCESS BY CLIENT

ACCESS CONTENT SERVER | S51

REPORT CONTENT ID | S52

RECEIVE CONTENT | S53

STORE CONTENT | S54

END

# FIG. 20

```
        ┌──────────────────────────────┐
        │  START CONTENT PROVIDING      │
        │  PROCESS BY CONTENT SERVER    │
        └──────────────────────────────┘
                      │
         ┌────────────▼──────────────┐      S61
    ┌────<      ACCESSED BY CLIENT?   >
    │    └────────────┬──────────────┘
    │  NO             │ YES
    │    ┌────────────▼──────────────┐  S62
    │    │      LOAD CONTENT ID       │
    │    └────────────┬──────────────┘
    │                 │
    │    ┌────────────▼──────────────┐  S63
    │    │      READ SPECIFIED        │
    │    │      CONTENT DATA          │
    │    └────────────┬──────────────┘
    │                 │
    │    ┌────────────▼──────────────┐  S64
    │    │      OUTPUT CONTENT        │
    │    └────────────┬──────────────┘
    │                 │
    │         ┌───────▼───────┐
    └─────────┤      END      │
              └───────────────┘
```

# FIG. 21

START PLAYING
PROCESS BY CLIENT

S71 | READ ATTRIBUTES OF CONTENT
SPECIFIED TO BE USED

S72 | IS USAGE RIGHT IN WHICH
ATTRIBUTES SATISFY
CONTENT RULES OBTAINED? — NO → USAGE RIGHT
OBTAINING
PROCESS | S73

YES

S74 | IS USAGE RIGHT WITHIN
EXPIRATION DATE? — NO → USAGE RIGHT
UPDATING
PROCESS | S75

YES

S76 | DO USAGE RULES AND
USAGE STATUS SATISFY
PLAYBACK RULES? — NO

YES

S77 | READ STORED CONTENT

S78 | CONTENT DECRYPTING
PROCESS

S79 | OUTPUT CONTENT

END

# FIG. 22

START USAGE RIGHT OBTAINING PROCESS BY CLIENT

S81 — OBTAIN URL

S82 — ACCESS URL

S83 — LOAD INFORMATION SPECIFYING USAGE RIGHT TO BE PURCHASED

S84 — LOAD USER ID AND PASSWORD

S85 — TRANSMIT USER ID AND PASSWORD ALONG WITH USAGE RIGHT SPECIFYING INFORMATION

S86 — IS USAGE RIGHT OBTAINED?

NO → S88 — ERROR PROCESSING → END

YES

S87 — STORE USAGE RIGHT, CERTIFICATE, AND PRIVATE KEY

RETURN

FIG. 23

START USAGE RIGHT PROVIDING
PROCESS BY LICENSE SERVER

S101
ACCESSED BY CLIENT?
NO
YES

S102
REQUEST TRANSMISSION OF USER
ID, PASSWORD, AND USAGE RIGHT
SPECIFYING INFORMATION AND
LOAD TRANSMITTED INFORMATION

S103
REQUEST BILLING SERVER TO
PERFORM CREDIT PROCESSING

S104
IS CREDIT OK?
NO

S114
ERROR
PROCESSING

YES

S105
SELECT USAGE RIGHT

S106
ADD LEAF ID

S107
SELECT USAGE RULE

S108
ADD DIGITAL SIGNATURE

S109
ENCRYPT Ksub USING Kpub

S110
ADD E(Kpub, Ksub)

S111
TRANSMIT USAGE RIGHT ALONG
WITH CERTIFICATE AND PRIVATE KEY

S112
STORE USAGE RIGHT ALONG WITH
CERTIFICATE AND PRIVATE KEY
IN ASSOCIATION WITH USER ID
AND PASSWORD

S113
BILLING PROCESSING

END

# FIG. 24

| VERSION |
|---|
| PROFILE |
| USAGE RIGHT ID |
| CREATION DATE |
| EXPIRATION DATE |
| USAGE RULES |
| CONTENT RULES |
| CONSTANT |
| LEAF ID |
| DIGITAL SIGNATURE |
| E (Kpub, Ksub) |
| CERTIFICATE |

# FIG. 25

```
          ┌─────────────────────────┐
          │    START DECRYPTING      │
          │    PROCESS BY CLIENT     │
          └─────────────────────────┘
                      │
                      ▼
     ┌─────────────────────────────────┐  S121
     │   DECRYPT EKB OF CONTENT        │
     │   USING DNK TO OBTAIN Kroot     │
     └─────────────────────────────────┘
                      │
                      ▼
     ┌─────────────────────────────────┐  S122
     │ DECRYPT E(Kroot, Kekb) OF CONTENT│
     │ USING Kroot TO OBTAIN Kekb       │
     └─────────────────────────────────┘
                      │
                      ▼
     ┌─────────────────────────────────┐  S123
     │ DECRYPT E(Kpub, Ksub) OF USAGE  │
     │ RIGHT USING Kpri TO OBTAIN Ksub │
     └─────────────────────────────────┘
                      │
                      ▼
     ┌─────────────────────────────────┐  S124
     │  OBTAIN Kc USING Kekb AND Ksub  │
     └─────────────────────────────────┘
                      │
                      ▼
     ┌─────────────────────────────────┐  S125
     │   DECRYPT E(Kc, Cont)           │
     │   USING Kc TO OBTAIN CONTENT    │
     └─────────────────────────────────┘
                      │
                      ▼
          ┌─────────────────────────┐
          │         RETURN          │
          └─────────────────────────┘
```

## FIG. 26

LICENSE SERVER 〜4

CONTENT SERVER 〜3

CONTENT

| EKB | E(Kroot, Kekb) | E(Kc, Content) |

DNK → S121

Kroot → S122

E(Kpub, Ksub)

Kekb

Kpri → S123

Ksub ⊕ S124

Kc → S125

Content

EP 1 496 642 B1

**EP 1 496 642 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001352321 A
- US 2004255138 A
- JP 2000048076 A